# EUROPÄISCHE PATENTSCHRIFT

(11) **EP 2 876 526 B1**
(45) Veröffentlichungstag und Bekanntmachung des Hinweises auf die Patenterteilung: **16.01.2019**
(21) Anmeldenummer: 14188399.1
(22) Anmeldetag: 10.10.2014
(51) Int. Cl.: G06F 3/01

(54) **Verfahren zur Erkennung von Gesten und Vorrichtung zur Gestenerkennung**
Device for gesture recognition and method for recognition of gestures
Procédé de reconnaissance de gestes et dispositif de reconnaissance de gestes

(30) Priorität: 10.10.2013 DE 102013017118; 23.12.2013 EP 13199377
(43) Veröffentlichungstag der Anmeldung: 27.05.2015
(73) Patentinhaber: Elmos Semiconductor Aktiengesellschaft, 44227 Dortmund (DE)
(72) Erfinder: Burchard, Bernd, Dr., 45276 Essen (DE); Hill, Uwe, 75196 Remchingen (DE); Mindl, Anton, Dr., 58515 Lüdenscheid (DE)
(74) Vertreter: Durm Patentanwälte PartG mbB

(56) Entgegenhaltungen:
- WO-A1-2011/069148
- DE-A1-102009 006 082
- US-A1- 2008 211 779
- US-A1- 2011 193 939

## Beschreibung

Die vorliegende Erfindung betrifft ein Verfahren zur Gestenerkennung und eine Vorrichtung zum Erkennen von Gesten, die einen Bildschirm, bevorzugt mit einer Krümmung, und eine Gestenerkennungseinheit umfasst. Die Gestenerkennungseinheit weist einen Sensor zur Erkennung der Position eines Objekts und zur Erkennung einer Positionsänderung des Objekts auf.
Derartige Vorrichtungen sind beispielsweise notwendig, um virtuelle Objekte auf einem Bildschirm zu bewegen oder zu modifizieren. Dabei geht die Tendenz immer mehr weg von einer Steuerung über Computer mit Tastatur oder angeschlossener Computermaus hin zu einer Bedienung durch Gesten. Hierbei sind beispielsweise Touchscreens im Einsatz, bei denen ein Benutzer die Bildschirmoberfläche berührt und auf diese Weise Aktionen auslöst. Daneben sind einige Geräte bekannt, bei denen durch berührungslose Gesten Aktionen auf dem Bildschirm ausgelöst werden können. Dazu werden teilweise Bedienelemente von dem Benutzer in der Hand getragen, wie z. B. bei Computerspielen.

Aus der US 2011 /193939 A1 und der WO 2011/069148 A1 sind Gestenerkennungssysteme bekannt, bei denen mittels einer Geste ein Bildobjekt oder ein Fenster auf dem Bildschirm berührungslos ausgewählt oder beeinflusst werden kann. Dazu wird der Raum vordem Bildschirm mittels Sensoren überwacht.

Die Nachfrage nach Anwendungen, bei denen eine Bedienung von technischen Geräten über einen Bildschirm und mittels Gestensteuerung erfolgt, wird aufgrund der steigenden Technizität und Verbreitung von geeigneten Geräten ständig zunehmen. Dabei werden die Anforderungen an die Handhabung der Daten ebenfalls steigen und an Komplexität gewinnen, genauso wie die Anforderungen an die Darstellung der Daten auf den Bildschirmen und an die Bildschirme selbst. Die Erwartungen an entsprechende Mensch-Maschinen-Schnittstellen werden sich grundlegend ändern. Gleiches gilt für die Einsatzgebiete und Anforderungen an die Präzision der Steuerungen für die Modifikation der grafisch dargestellten Objekte.

Aus den zu erwartenden Änderungen und Anforderungen des Stands der Technik ergibt sich die Aufgabe, eine optimierte und verbesserte Vorrichtung zur Gestenerkennung vorzuschlagen, die insbesondere bei gekrümmten Bildschirmen eingesetzt wird und überlappende Koordinatensysteme verarbeiten kann.

Gelöst wird die vorliegende Aufgabe durch ein Verfahren zur Gestenerkennung mit den Merkmalen des Anspruchs 1 sowie eine Vorrichtung zur Erkennung von Gesten mit den Merkmalen der Patentansprüche 9 und 10.

Das erfindungsgemäße Verfahren zur Gestenerkennung bedient sich einer Gestenerkennungsvorrichtung mit einem Bildschirm zur Anzeige von graphischen Daten oder von wenigstens einem Bildobjekt und mit einer Gestenerkennungseinheit. Die Gestenerkennungseinheit umfasst einen Sensor zur Erkennung eines Objekts und des Abstands des Objekts. Das Objekt, das auch Gesteneingabeobjekt genannt wird, dient zur Steuerung der Vorrichtung zur Gestenerkennung und optional zur Steuerung des automatisierten Verfahrens. Der Abstand des Gesteneingabeobjekts, das beispielsweise ein Finger, eine Hand oder ein Eingabegerät sein kann, zum Bildschirm und dessen Oberfläche wird berechnet. Der Bildschirm kann eine Farbgebungsschicht mit Leuchtmitteln und eine transparente Abdeckung zur Abdeckung der Farbgebungsschicht umfassen. In diesem Fall kann der Abstand des Objekts zur Farbgebungsschicht oder bevorzugt zur transparenten Abdeckung des Bildschirms ermittelt werden.

Gemäß dem erfindungsgemäßen Verfahren wird zunächst die Position des Objekts bzw. Gesteneingabeobjekts ermittelt. Alternativ oder zusätzlich kann auch eine Positionsänderung des Objekts erfasst werden, beispielsweise auch ein Drehen, Neigen, Verschieben oder Kippen. Dazu kann der Abstand des Objekts von dem Bildschirm mittels eines Sensors gemessen werden. Es folgt die Bestimmung der Position des Objekts oder der Positionsänderung mittels eines Positionserkennungsalgorithmus. Die Position kann in einem Sensorkoordinatensystem im Erfassungsbereich des Sensors bestimmt werden. Das Sensorkoordinatensystem kann so ausgeprägt sein, dass es genau den Erfassungsbereich eines Sensors abdeckt. Sind mehrere Sensoren vorhanden, können entweder mehrere Sensorkoordinatensysteme vorhanden sein oder es kann ein einziges Sensorkoordinatensystem gebildet werden, das die Erfassungsbereiche aller Sensoren umfassen kann. Es ist auch möglich, dass für jeden der Sensoren ein eigenes Sensorkoordinatensystem aufgespannt wird, wobei Überlappungen der einzelnen Sensorkoordinatensysteme auftreten können. Wenn sich ein Objekt oder Gesteneingabeobjekt in einem der Überlappungsbereiche befindet, kann automatisiert entschieden werden, welches Sensorkoordinatensystem verwendet wird.

In einem weiteren Schritt wird die Position des Objekts in einem Gestenkoordinatensystem bestimmt, das ein dreidimensionales nicht kartesisches Koordinatensystem ist; bevorzugt kann das Koordinatensystem orthogonal sein. Nachdem die Position des Objekts oder bei Mehrfachausführung der einzelnen Schritte eine Positionsänderung bestimmt ist, wird eine Geste erkannt. Die Geste und das Erkennen der Geste kann zur Ausführung einer Aktion, zur Änderung eines Gerätestatus oder Ähnlichem führen.

Es werden mehrere Bildobjekte auf dem Bildschirm dargestellt. Ein Bildobjekt kann beispielsweise eine Anzeige oder ein Fenster sein, in dem eine Auswahl getroffen oder ein Bereich markiert werden kann. Die Auswahl oder das Markieren kann durch eine Geste erfolgen. Jedes auf dem Bildschirm dargestellte Bildobjekt verfügt über ein eigenes Gestenerkennungskoordinatensystem. Die Lage des Gestenerkennungskoordinatensystem hängt von der Lage des Bildobjekts auf dem Bildschirm ab. Dies hat den Vorteil, dass eine eindeutige Zuordnung von Gestenerkennungskoordinatensystem zu dem Bildobjekt erfolgt, was inbesondere bei einer Überlappung von mehreren Gestenerkennungskoordinatensystemen zu einer schnelleren und zuverlässigeren Erkennung einer Geste führt.
In einem weiteren Schritt erfolgt die Zuweisung einer Priorität oder Hierarchie für wenigstens eines der Bildobjekte. Jedem der Bildobjekte wird eine Priorität oder Hierarchie zugewiesen. Hierdurch kann den Bildobjekten eine Wichtigkeit oder Rangfolge für die Verwendung der jeweiligen Gestenerkennungskoordinatensysteme zugeordnet werden. Beispielsweise kann ein Bildobjekt, das sicherheitsrelevante Veränderungen zulässt, eine höhere Priorität haben oder in einer Hierarchie eine höhere Ebene einnehmen, als ein Bildobjekt, das zur Anzeige oder Bedienung von Komfortfunktionen verwendet wird. Dies kann bei der Auswahl eines Gestenerkennungskoordinatensystems Berücksichtigung finden.
In einem weiteren Schritt wird eines der Gestenerkennungskoordinatensysteme eines Bildobjekts ausgewählt. Das (ausgewählte) Gestenerkennungskoordinatensystem wird zur Bestimmung der Position des Gesteneingabeobjekts verwendet, um bei Erkennen einer Geste eine Aktion innerhalb des ausgewählten Bildobjekts oder eines Elementes bzw. eines Gerätes hervorzurufen, das in dem ausgewählten Bildobjekt dargestellt ist. Das ausgewählte Gestenerkennungskoordinatensystem ist dem entsprechenden Bildobjekt zugeordnet. Die Auswahl erfolgt unter Berücksichtigung der Priorität oder Hierarchie des jeweiligen Bildobjekts.
In einem weiteren Verfahrensschritt wird bevorzugt das Gestenerkennungskoordinatensystem derart verändert, dass ein Punkt des Bildobjekts auf dem Bildschirm in dem Koordinatenursprung des Gestenerkennungskoordinatensystems liegt. Bevorzugt liegt der Mittelpunkt oder der Schwerpunkt des Bildobjekts im Ursprung des Gestenerkennungskoordinatensystems. Es ist jedoch auch möglich, dass ein Randpunkt oder ein anderer Punkt des auf dem Bildschirm dargestellten Bildobjekts im Koordinatenursprung des Gestenkoordinatensystems liegt.

Bevorzugt erfolgt das Auswerten der erkannten Geste in einem weiteren Schritt. In Abhängigkeit von der erkannten Geste wird eine Aktion hervorgerufen. Die Aktion kann zur Steuerung eines zu bedienenden Gerätes oder zur Zustandsänderung eines Gerätes sein. Es ist auch mögilch, dass die Aktion eine Zustandsänderung der Vorrichtung zur Gestenerkennung oder eine Änderung des angezeigten Bildschirminhalts einschließt. Beispielsweise kann das angezeigte Bildobjekt auf dem Bildschirm verändert werden. Es ist beispielsweise möglich, eine Auswahl eines Bildobjekts oder eines Teilbereichs innerhalb eines Bildobjekts zu treffen. Bei der Verwendung des Verfahrens in einem Fahrzeug kann das Bildobjekt beispielsweise die Bedienoberfläche der Klimaanlage sein. Mittels einer Geste kann dann eine bestimmte Auswahl getroffen werden oder beispielsweise ein Schiebeschalter verändert werden, um etwa die Temperatur oder die Luftmenge zu verändern.

In einer ebenfalls bevorzugten Ausführungsform des Verfahrens werden zur Erkennung der Position des Objekts oder einer Positionsänderung des Objekts (Gesteneingabeobjekt) wenigstens drei Sensoren verwendet. Bevorzugt verwendet jeder der Sensoren ein (eigenes) Sensorkoordinatensystem. Besonders bevorzugt ist das Sensorkoordinatensystem ein sphärisches Koordinatensystem. Andere Koordinatensysteme können ebenfalls verwendet werden, beispielsweise ein Polarkoordinatensystem.

Die Verwendung von mehreren Sensoren hat den Vorteil, dass die Position des Objekts sehr genau bestimmt werden kann. Dabei können recht einfache Sensoren verwendet werden. Beispielsweise ist es möglich, Sensoren zu verwenden, die lediglich den Abstand zum Objekt messen. Aus den Abständen mehrerer Sensoren lassen sich die Positionskoordinaten des Objekts einfach ermitteln. Das System kann entsprechend preisgünstig aufgebaut werden.

Gemäß dem Verfahren werden auf dem Bildschirm optional mehrere Bildobjekte, wie beispielsweise Fenster oder Anzeigetafeln, dargestellt. Werden zusätzlich auch mehrere Sensoren mit mehreren Sensorkoordinatensystemen verwendet, erfolgt bevorzugt ein Zwischenschritt zwischen der Umrechnung der Positionskoordinaten des Objekts aus dem Sensorkoordinatensystem in das Gestenerkennungskoordinatensystem. Dieser Zwischenschritt kann über die Verwendung eines Bezugskoordinatensystems des Bildschirms erfolgen.

Bevorzugt werden die Positionskoordinaten des Objekts aus dem Sensorkoordinatensystem in ein Bezugskoordinatensystem des Bildschirms transformiert. Das Bezugskoordinatensystem des Bildschirms ist vorzugsweise ein kartesisches Koordinatensystem. In einem weiteren Schritt kann für jedes auf dem Bildschirm dargestellte Bildobjekt ein eigenes Gestenerkennungskoordinatensystem erstellt werden. Ist nur ein Bildobjekt auf dem Bildschirm dargestellt, so kann dieser Schritt entfallen.

In einer bevorzugten Ausführungsform des Verfahrens wird der Abstand des Objekts von dem Bildschirm entlang einer Rückverfolgungskurve in dem Sensorkoordinatensystem ermittelt. Sind mehrere Sensorkoordinatensysteme vorhanden, wird die Rückverfolgungskurve entlang des ausgewählten Sensorkoordinatensystems respektive des Sensorkoordinatensystems, dessen Sensor die Messung des Abstands zum Objekt durchführt, ermittelt.

Bei mehreren Sensoren, die zur Messung des Abstands verwendet werden, kann die Position des Objekts aus den Abstandsmessungen aller Sensoren ermittelt werden. Die Position des Objekts kann in einem Gestenerkennungskoordinatensystem bestimmt werden, bevorzugt in dem Gestenerkennungskoordinatensystem eines ausgewählten Bildobjekts, wenn mehrere Bildobjekte auf dem Bildschirm angezeigt sind.

In einem weiteren Schritt kann eine Rückverfolgungskurve in dem Gestenerkennungskoordinatensystem von dem Objekt zum Bildschirm festgelegt und ein Auftreffpunkt der Rückverfolgungskurve auf dem Bildschirm ermittelt werden. In einem weiteren Schritt kann der Auftreffpunkt ausgewertet werden. Hierdurch kann erkannt werden, ob eine Geste einen vorbestimmten Bereich innerhalb des Bildobjekts betreffen soll, weil das Gesteneingabeobjekt (Objekt) auf diesen Bereich gerichtet ist. Der Bereich kann bevorzugt den Auftreffpunkt auf den Bildschirm einschließen.
Optional kann ein Vergleichen des Abstands oder des Auftreffpunkts auf den Bildschirm mit einem vorgegebenen Schwellwert erfolgen, um ein Auswerten und eine Zuordnung des Gesteneingabeobjekts zu einem vordefinerten Bereich innerhalb des Bildobjekts sicherzustellen.

In einer weiter bevorzugten Ausführungsform wird in einem weiteren Schritt ein Markierungsbereich auf dem Bildschirm erzeugt, bevorzugt mittels der Gestenerkennungseinheit. Bevorzugt kann die Auflösung zur Darstellung eines grafischen Objekts oder eines Bildobjekts oder eines Teils eines Bildobjekts in dem Markierungsbereich von der Auflösung außerhalb des Markierungsbereichs verschieden sein. Besonders bevorzugt erfolgt eine Vergrößerung des in dem Markierungsbereich dargestellten grafischen Objekts oder des Teils des Bildobjekts. Hierdurch kann beispielsweise eine Auswahl eines bestimmten Teils eines Bildobjekts oder eines grafischen Objekts, gegebenenfalls innerhalb des Bildobjekts, genauer erfolgen. Eine Zuordnung der Geste zu dem ausgewählten grafischen Objekt oder Teil des Bildobjekts lässt sich für den Anwender einfacher realisieren. Möglicherweise werden erst bei Auswahl und Erzeugung des Markierungsbereichs bestimmte Details des grafischen Objekts oder des zur Markierung vorgesehenen Teils des Bildobjekts angezeigt oder sind erst dann wahrnehmbar.

Bevorzugt wird das erfindungsgemäße Verfahren mit einem Bildschirm verwendet, der einen ersten Bereich mit einer ersten Krümmung aufweist. Bevorzugt hat der Bildschirm an wenigstens einer Stelle eine von Null verschiedene Krümmung, die zur Anzeige von grafischen Daten oder einem Bildobjekt verwendet wird. Das ausgewählte Bildobjekt, dessen Inhalt durch das Ausführen einer Aktion aufgrund einer erkannten Geste ausgeführt werden soll, kann sich in einem gekrümmten Bereich des Bildschirms befinden.

Bevorzugt wird das Verfahren angewendet mit einem Bildschirm, der einen zweiten Bereich mit einer zweiten Krümmung aufweist. Besonders bevorzugt ist das Vorzeichen der ersten Krümmung von dem Vorzeichen der zweiten Krümmung verschieden.

Erfindungsgemäß wird die vorliegende Aufgabe auch durch eine Vorrichtung zur Gestenerkennung gelöst, die einen Bildschirm und eine Gestenerkennungseinheit umfasst. Die Gestenerkennungseinheit kann einen Sensor zur Erkennung der Position eines Objekts und zur Erkennung einer Postionsänderung des Objekts, also eines Gesteneingabeobjekts wie beispielsweise eines Fingers, einer Hand oder eines Eingabeelements (z. B. Stift, Gerät, Bedienteil) umfassen. Die Gestenerkennungseinheit ist dazu eingerichtet und ausgebildet, um ein Erkennungsverfahren zur Erkennung einer Geste gemäß dem oben beschriebenen Verfahren auszuführen.

Erfindungsgemäß kann die Vorrichtung zur Gestenerkennung einen Bildschirm mit einem ersten Bereich mit einer ersten Krümmung und einen zweiten Bereich mit einer zweiten Krümmung aufweisen. Das Vorzeichen der ersten Krümmung ist bevorzugt verschieden von dem Vorzeichen der zweiten Krümmung. Der Bildschirm kann an wenigstens einer Stelle, die zur Anzeige grafischer Daten oder eines Bildobjekts wie eines Fensters oder einer Maske verwendet wird, eine von Null verschiedene Krümmung haben.

Die Gestenerkennungseinheit weist einen Positionserkennungsalgorithmus auf, der die Position eines Objekts in einem Gestenerkennungskoordinatensystem bestimmt. Dabei wird die Position aus dem Abstand des Objekts zum Bildschirm mittels eines Sensors ermittelt. Das Gestenerkennungskoordinatensystem ist ein nicht kartesisches Koordinatensystem. Es ist vorzugsweise orthogonal.

Bevorzugt hat die Vorrichtung zur Gestenerkennung drei Sensoren, die bevorzugt jeweils den Abstand zu einem Objekt ermitteln. Aus den ermittelten Abständen kann mittels der Vorrichtung die Position eines Objekts in dem Gestenerkennungskoordinatensystem bestimmt werden.

Bevorzugt wird die Position des Objekts in einem Sensorkoordinatensystem bestimmt. Die Sensoren können jeweils ein eigenes Sensorkoordinatensystem haben. Es kann ein Gesamtsensorkoordinatensystem verwendet werden, wobei bevorzugt alle der Sensoren in dem Gesamtsensorkoordinatensystem angeordnet sind. Die Gestenerkennungseinheit der Vorrichtung transformiert die Position des Objekts aus dem Sensorkoordinatensystem bevorzugt zunächst in ein Bezugskoordinatensystem, das bevorzugt ein Bezugskoordinatensystem des Bildschirms ist. Bevorzugt ist das Bezugskoordinatensystem ein kartesisches Koordinatensystem. Später kann die Objektposition von dem Bezugskoordinatensystem in ein Gestenerkennungskoordinatensystem transformiert werden.
Bevorzugt werden von der Gestenerkennungseinheit mehrere Gestenerkennungskoordinatensysteme verwendet, um eine Geste des Objekts zu erkennen und eine Aktion zur Steuerung eines zu bedienenden Gerätes oder der Vorrichtung auszulösen.
Bevorzugt können mehrere Bildobjekte oder grafische Objekte auf dem Bildschirm dargestellt werden. Für jedes Bildobjekt kann bevorzugt ein eigenes Gestenerkennungskoordinatensystem verwendet werden.

Die Gestenerkennungseinheit ist dazu eingerichtet und ausgebildet, eine Auswahl aus mehreren Gestenerkennungskoordinatensystemen auszuführen. Die Auswahl der Gestenerkennungskoordinatensysteme der Bildobjekte erfolgt mit einem Auswahlalgorithmus. Die Auswahl erfolgt anhand der Priorität oder Hierarchie des Bildobjekts. Weiter kann die Auswahl in Abhängigkeit der Position des Objekts (Gesteneingabeobjekt), der Geschwindigkeit des Objekts oder von anderen Faktoren erfolgen. Ebenso kann die Auswahl von einer vorher getroffenen Auswahl, von der letzten Bedienung, von der Uhrzeit oder von dem Umgebungslicht abhängen.
In einer bevorzugten Ausführungsform der Vorrichtung oder des Verfahrens werden wenigstens zwei Gestenerkennungskoordinatensysteme verwendet. Wenigstens zwei der Gestenerkennungskoordinatensysteme können einen Überlappungsbereich aufweisen. Bevorzugt wird der Überlappungsbereich einem der beiden Gestenerkennungskoordinatensysteme zugeordnet.
Die erwähnten Koordinatensysteme (Sensorkoordinatensystem, Bezugskoordinatensystem und Gestenkoordinatensystem) sind bevorzugt dreidimensionale Koordinatensysteme.
Die Vorrichtung kann einen Bildschirm mit einer Farbgebungsschicht und einer wenigstens teilweise transparenten Abdeckung, ein Gehäuse mit Gehäuseoberfläche zur Aufnahme des Bildschirms und eine Gestenerkennungseinheit umfassen, die einen Sensor zur Erkennung der Position eines Objekts, insbesondere eines Eingabeobjekts, und zur Erkennung einer Positionsänderung des Objekts oder der Orientierung des Objekts haben kann. Das Objekt bzw. das Eingabeobjekt kann ein Finger, eine Hand, ein Zeh, ein Fuß, ein Arm oder Bein, eine andere Extremität oder ein Kopf sein. Es können auch besondere Eingabegeräte, wie beispielsweise Stifte, Schläger oder elektronische Geräte oder Ähnliches als Eingabeobjekte verwendet werden. Beispielsweise könnte ein Bedienelement in der Hand gehalten oder an einen Benutzer angebracht werden, beispielsweise als Armband, um Bein oder Arm, oder eingenäht in den Ärmel oder eine Tasche oder als Schmuckstück oder als Kopfband um den Kopf etc. getragen werden. Andere oder ähnliche Ausführungen sind denkbar.
Die Farbgebungsschicht des Bildschirms kann Leuchtmittel umfassen und ist in der Regel die Pixelebene des Bildschirms, auf der die Bilder und Objekte dargestellt werden. Diese Farbgebungsschicht kann in einer ersten zweidimensionalen Mannigfaltigkeit liegen. Die transparente Abdeckung des Bildschirms kann die Farbgebungsschicht abdecken und von der Farbgebungsschicht beabstandet sein. Sie liegt in einer zweiten zweidimensionalen Mannigfaltigkeit.
Der Bildschirm kann ein wenigstens teilweise gekrümmter Bildschirm sein, der eine wenigstens teilweise nicht ebene Fläche aufweist. In einer ersten Stufe können derartige Bildschirme zumindest zylindrisch lokal um eine Achse gebogen sein. Es sind aber auch beliebige andere Formen möglich, die der Bildschirm einnehmen kann. Beispielsweise können dies besondere Krümmungen sein oder Bereiche mit einem Hohlraum oder tubusartig geformte Teile sein. Beispielsweise könnte ein Bildschirm die Form einer Tasse mit Henkel aufweisen. Auch andere weitaus komplexere Topologien für Bildschirme werden in Zukunft möglich und denkbar sein. Zu diesen Bildschirmen wird es auch andere, bisher nicht bekannte Mensch-Maschine-Schnittstellen als bisher geben.

In einer bevorzugten Ausführungsform hat der Bildschirm eine Fläche, die ein mathematisch topologisches Geschlecht größer Null aufweist. Hierbei ist unter der Fläche des Bildschirms nicht nur die Oberfläche, also zum Beispiel die (wenigstens teilweise) transparente Abdeckung zu verstehen, sondern die Fläche kann ebenfalls die Farbgebungsschicht einschließen. Insgesamt hat der Bildschirm in diesem Fall ein mathematisch topologisches Geschlecht größer Null. Mit anderen Worten kann der Bildschirm vereinfacht ausgedrückt eine Anzahl von Löchern haben, die von der topologischen Fläche umschlossen wird. Das Geschlecht ist folglich eine topologische Invariante. Unter dem Geschlecht der Oberfläche ist dabei die Anzahl möglicher Schnitte entlang disjunkter, einfach geschlossener Kurven zu verstehen, so dass die Fläche nach jedem Schnittvorgang immer noch zusammenhängend ist. Eine Fläche mit dem topologischen Geschlecht Null weist folglich keine Löcher auf.

Das Verfahren und die Vorrichtung zur Gestenerkennung haben den Vorteil, dass auch bei der Verwendung von gekrümmten Bildschirmen eine Gestensteuerung von Objekten, die auf derartigen Bildschirmen dargestellt werden, möglich ist. Dazu muss der Abstand des (Gesten-) Eingabeobjekts bzw. eines Objektes von dem Bildschirm erkannt werden. Dies wird im Weiteren noch ausgeführt.

Durch die Verwendung von gekrümmten Bildschirmen können sich die Bildschirme in vorhandene Oberflächen, die ebenfalls gekrümmt sein können, vorzugsweise nahtlos einfügen. Bevorzugt kann der Bildschirm in ein Gehäuse (z. B. der Vorrichtung) derart eingebaut sein, dass die Krümmung des Bildschirms und die Krümmung der Gehäuseoberfläche des Gehäuses an einer gebildeten Begrenzungskante im Wesentlichen gleich sind. Der Bildschirm geht im Wesentlichen nahtlos und bündig in das Gehäuse über. Es entsteht kein störender Vorsprung, Rücksprung oder Absatz. Der Übergang kann im Wesentlichen ohne Versatz sein, d. h. der Versatz ist kleiner als 2 mm, bevorzugt kleiner als 1 mm, besonders bevorzugt kleiner als 0,5 mm. Je kleiner der Versatz ist desto ebenmäßiger ist die Erscheinung der Vorrichtung.

In einer bevorzugten Ausführungsform kann der Bildschirm zumindest in Teilen flexibel sein. Der Bildschirm kann folglich in seiner Form und Topologie verändert werden. Bevorzugt hat der flexible Bildschirm eine variable Krümmung. Er kann bevorzugt mehrfach gekrümmt sein.

Der flexible Bildschirm (gekrümmt oder nicht gekrümmt) kann - wie der nicht flexible Bildschirm auch - aus Teilbildschirmen zusammengesetzt sein, wobei die Teilbildschirme selbst flexibel sein können oder lediglich in ihrer Position und Orientierung zueinander veränderbar sein können. Der Bildschirm kann topologisch nicht orientierbar sein.

Bevorzugt kann die Gestenerkennungseinheit oder jedenfalls ein Sensor zur Erkennung der Position eines Objektes in den Bildschirm oder in das Gehäuse zur Aufnahme des Bildschirms integriert sein, um eine sehr kompakte Bauweise zu erzielen. Bevorzugt ist der Sensor für den Benutzer nicht sichtbar.

Bevorzugt ist die Gestenerkennungseinheit dazu geeignet und ausgebildet, eine definierte Geste zu erkennen. Als definierte Geste werden Gesten verstanden, die zunächst der Gestenerkennungseinheit gelehrt wurden und abgespeichert sind. Dies kann beispielsweise in einer Speichereinheit oder in einer Recheneinheit zur Verarbeitung der ermittelten Objektdaten erfolgen. In einer bevorzugten Ausführungsform umfasst die Vorrichtung zur Gestenerkennung daher auch eine Recheneinheit und/oder eine Speichereinheit. Typischerweise wird hierzu beispielsweise ein Verfahren auf Basis eines neuronalen Netzes angewandt. Derartige Gesten sind beispielsweise aus der DE 10 2012 010 627.0 bekannt. Es können jedoch auch andere, nicht vorher einge-übte Gesten erkannt werden. Dann ist eine erhöhte Prozessorleistung und die Kapazität der Recheneinheit erforderlich. Aus der DE 10 2012 010 627.0 ist ebenfalls bekannt, dass hierfür die Verwendung von HMM-Verfahren (Hidden Markov Model) und Viterbi-Algorithmen vorteilhaft ist, die durch den Prozessor ausgeführt werden.

Die Gestenerkennungseinheit kann Berührungsgesten, dreidimensionale Gesten und/oder berührungslose Gesten erkennen. Berührungsgesten werden auch als Touch-Gesten bezeichnet. Beispielsweise kann die transparente Abdeckung des Bildschirms mit dem Eingabeobjekt, beispielsweise dem Finger, berührt werden. In der Regel werden kapazitive und/oder induktive Sensoren eingesetzt, um die Position des Objekts und/oder eine entsprechende Geste zu ermitteln. Optische Erkennungssysteme sind ausdrücklich auch möglich.

Dreidimensionale Gesten schließen alle Gesten ein, bei denen sich das Objekt zur Eingabe im dreidimensionalen Raum bewegt. Eine Berührung des Bildschirms kann eingeschlossen sein. Berührungslose Gesten selbst können zum einen dreidimensionale Gesten, bei denen eine Bewegung des Objekts in eine beliebige Raumrichtung erfolgt wie auch zweidimensionale Gesten im Raum, bei denen der Abstand zur Gestenerkennungseinheit oder zur ersten oder zweiten Mannigfaltigkeit des Bildschirms unverändert bleibt, umfassen.

Bevorzugt kann die Gestenerkennungseinheit den Abstand zwischen dem Bildschirm (z.B. der ersten zweidimensionalen Mannigfaltigkeit) und dem Objekt entlang einer Rückverfolgungskurve von dem Objekt zum Bildschirm ermitteln. Der Schnittpunkt zwischen der Rückverfolgungskurve und der Oberfläche des Bildschirms kann als Auftreffpunkt aufgefasst werden. Die Ermittlung des Abstandes ist bei einem ebenen Bildschirm ohne Probleme möglich. Bei einem beliebig gekrümmten Bildschirm erweist sich die Ermittlung des Abstands jedoch als aufwändig und rechenintensiv. Sie ist nicht mehr ohne Weiteres möglich. Deshalb wird bevorzugt zur Erkennung der Position oder Orientierung eines Objekts oder zur Erkennung der Positionsänderung eines Objekts ein dreidimensionales Koordinatensystem verwendet, das in der Gestenerkennungseinheit oder in einer Recheneinheit implementiert ist.

Die Oberfläche des Bildschirms liegt bevorzugt in einer der Koordinatenebenen des oder der dreidimensionalen Koordinatensysteme (Sensorkoordinatensystem, Gestenerkennungskoordinatensystem, Bezugskoordinatensystem). Die Koordinatenebene ist bei einem kartesischen Koordinatensystem die X-Y-Koordinatenfläche. Bei einem zylindrischen Koordinatensystem wäre es beispielsweise die Ebene, bei der der Radius zum Koordinatenursprung konstant ist. Bei beliebig geformten Koordinatensystemen weist die Bildschirmoberfläche eine entsprechende Form auf, die gegebenenfalls nicht mehr ohne Weiteres vorstellbar, jedoch mathematisch beschreibbar ist. Die dreidimensionalen Koordinatensysteme können orthogonale oder nicht-orthogonale Koordinationssysteme sein.

Bevorzugt ist die Rückverfolgungskurve abhängig von dem verwendeten dreidimensionalen Koordinatensystem. Die Rückverfolgungskurve kann bevorzugt entlang einer Koordinatenlinie des dreidimensionalen Koordinatensystems verlaufen. Besonders bevorzugt kann eine Koordinatenlinie des dreidimensionalen Koordinatensystems verwendet werden, auf der das Eingabeobjekt liegt. Es können auch andere Rückverfolgungskurven verwendet werden, beispielsweise eine, die den kürzesten Abstand zum Bildschirm umfasst.

Der Abstand des Eingabeobjekts von der zweidimensionalen Mannigfaltigkeit bzw. dem Bildschirm kann wenigstens mehrere Millimeter, bevorzugt wenigstens mehrere Zentimeter groß sein. Das Eingabeobjekt kann einige Meter von der zweidimensionalen Mannigfaltigkeit entfernt sein. Die Entfernung des Eingabeobjekts von dem Bildschirm richtet sich bevorzugt nach der Anwendung und nach der Größe des Bildschirms.

Bevorzugt kann die Gestenerkennungseinheit oder eine Recheneinheit der Vorrichtung zur Gestenerkennung einen Markierungsbereich, bevorzugt in der ersten zweidimensionalen Mannigfaltigkeit oder der zweiten zweidimensionalen Mannigfaltigkeit, erzeugen. Der Markierungsbereich kann bevorzugt ein Bereich sein, der den Auftreffpunkt zwischen dem Eingabeobjekt und der zweidimensionalen Mannigfaltigkeit einschließen kann. Es ist auch möglich, einen Markierungspunkt zu definieren, der bezüglich der zweidimensionalen Mannigfaltigkeit (erster oder zweiter) oder bezüglich der Bildschirmoberfläche einen konstanten Abstand zum Auftreffpunkt hat. Somit kann es eine Parallelverschiebung zwischen dem Auftreffpunkt und dem Markierungspunkt bezüglich des gewählten dreidimensionalen Koordinatensystems geben, in dem die zweidimensionale Mannigfaltigkeit liegt. Wird ein Auftreffpunkt verwendet, so kann er Teil des Markierungsbereichs sein.

Bevorzugt kann der Markierungsbereich eine Auflösung zur Darstellung eines grafischen Objekts aufweisen, die von der Auflösung der Darstellung des grafischen Objekts außerhalb des Markierungsbereichs verschieden sein kann. Der Markierungsbereich kann also eine andere Auflösung als der Rest der zweidimensionalen Mannigfaltigkeit haben. Somit kann ein Markierungsbereich gebildet werden, der eine Lupenfunktion auf dem gekrümmten Bildschirm realisiert.

Somit lässt sich also eine Lupen-Funktion oder Spot-Funktion auf einem Bildschirm durch eine dreidimensionale Geste eines Eingabeobjekts, wie beispielsweise eines Fingers oder einer Hand, erzielen. Mögliche Gesten für die Steuerung sind beispielsweise in der DE 10 2012 010 627 offenbart.

Anstelle eines Markierungsbereichs kann ein Markierungsobjekt erzeugt werden, das einen Zeiger oder einen Cursor repräsentieren kann. Mittels des Cursors können auf dem Bildschirm dargestellte Objekte ausgewählt, verschoben oder manipuliert werden. Beispielsweise können Schalter oder Knöpfe nicht mehr als Elemente realisiert sein, sondern lediglich auf einem Bildschirm dargestellt sein. Mittels Gestensteuerung kann ein Cursor auf dem Bildschirm bewegt und ein Schalter geschaltet oder ausgewählt werden.

Insbesondere kann der gekrümmte Bildschirm in einer besonders bevorzugten Ausführungsform Teil eines Bedienelementes, eines Schalters oder Teil eines Drehknopfes sein. Der Bildschirm kann zum Anzeigen eines eingestellten Wertes, beispielsweise eines Temperaturwertes oder Ähnliches, oder eines Zustands, wie beispielsweise eingeschaltet, ausgeschaltet, aktiv, gesperrt oder Ähnliches, verwendet werden.

Der Markierungsbereich kann nicht nur eine Lupenfunktion darstellen, bei der die Auflösung gegenüber der Auflösung der restlichen zweidimensionalen Mannigfaltigkeit verändert ist. Es ist auch möglich, andere Strukturmerkmale der Bildschirmpunkte im Bereich des Markierungsbereichs zu verändern. Beispielsweise kann die Helligkeit, die Farbe, die Farbsättigung, der Kontrast oder Ähnliches verwendet werden. So lässt sich beispielsweise ein Spot realisieren, bei dem die Objekte innerhalb des Markierungsbereichs heller dargestellt werden.

Bevorzugt ist bei der Darstellung eines Markierungsobjekts (Cursor) und/oder eines Markierungsbereichs auf dem Bildschirm wenigstens ein Strukturmerkmal des Markierungsobjekts und/oder des Markierungsbereichs von dem Eingabeobjekt (Gesteneingabeobjekt) abhängig. Bevorzugt ist wenigstens ein Strukturmerkmal von dem Abstand des Eingabeobjekts zu der zweidimensionalen Mannigfaltigkeit oder von dem Auftreffpunkt einer Rückverfolgungslinie zwischen dem Eingabeobjekt und dem Bildschirm abhängig. Das Strukturmerkmal kann von den Eigenschaften des Eingabeobjekts abhängen, beispielsweise von dessen Größe oder Form. Bei einer Hand als Eingabeobjekt kann das Strukturmerkmal beispielsweise davon abhängen, ob die Hand eine Faust bildet oder als flache Hand geformt wird.

Als Strukturmerkmal wird auch eines der folgenden Elemente bzw. Merkmale verstanden: die Transparenz oder die Modulationsfrequenz, der Modulationsrhythmus und die Modulationsamplitude eines der oben genannten Merkmale. Beispielsweise könnten einzelne Bildpunkte heller und dunkler aufleuchten und dies mit einer bestimmten Frequenz, einem vorgegebenen Rhythmus oder einer bestimmten Amplitude an Helligkeit. Die Änderungen und die Art der Änderung bzw. die Geschwindigkeit der Änderung einer der Merkmale wie Muster, Farbe, Größe, Form, Transparenz können also ebenfalls ein Strukturmerkmal sein.

Neben den oben genannten Strukturmerkmalen können durch Änderungen der Position des Eingabeobjekts, seiner Form, Größe, Gestaltung, Transparenz, Reflektivität oder des Auftreffpunkts der Rückverfolgungskurve auf den Bildschirm von dem Eingabeobjekt Änderungen, wie beispielsweise Schärfe oder Auflösung des Markierungsbereichs, hervorgerufen werden. Diese Änderungen des Markierungsbereichs können beispielsweise in Abhängigkeit davon erfolgen, ob die Änderung schneller oder langsamer als ein vorgegebener oder einstellbarer Schwellwert ist. Der Schwellwert kann beispielsweise mit anderen Schwellwerten übereinstimmen oder unterschiedlich zu ihnen sein. Dies kann beispielsweise angewandt werden, um Wischgesten von anderen Gesten zur Objektselektion zu unterscheiden. Objektselektionsgesten erfolgen dabei in der Regel deutlich langsamer als Wischgesten.

Die Änderung der Strukturmerkmale kann auch von weiteren Parametern abhängen. Die Abhängigkeit der Änderung der Strukturmerkmale kann zeitlich beschränkt oder aber zeitlich verschieden sein. Die Abhängigkeit kann von den Eigenschaften oder dem Zustand des zu bedienenden Gerätes und/oder des Eingabeobjekts abhängig sein. Beispielsweise kann eine Annäherung des Eingabeobjekts an den Bildschirm im Falle der Einsatzbereitschaft oder Eingabebereitschaft eines Gerätes andere Änderungen des Markierungsbereichs oder des Markierungsobjekts hervorrufen als in einem Gerätezustand, in dem keine Eingabe erfolgen kann. Auch können Objekte sichtbar oder unsichtbar gemacht oder in ihrer Transparenz verändert werden. Eine Änderung der Struktur der Objekte oder ihres Aussehens ist möglich.

Bevorzugt können Änderungen des Markierungsbereichs und/oder des Markierungsobjekts von der Art der Änderung, der Eigenschaften des Eingabeobjekts, des Abstands oder des Ortes des Auftreffpunkts abhängen.

Bevorzugt wird eine derartige Änderung erkannt und bevorzugt von der Recheneinheit wenigstens die zeitliche erste Ableitung der Änderungen erfasst. Bevorzugt können zeitlich höhere Ableitungen der Änderungen ermittelt werden, bevorzugt wenigstens die zweite zeitliche Ableitung, die Aufschluss über die Beschleunigung der Änderung gibt.

Der Markierungsbereich und/oder das Markierungsobjekt werden bevorzugt in Abhängigkeit der absoluten Änderungen oder der zeitlichen ersten oder höheren Ableitungen dieser Änderungen verändert, die mit einem vorgegebenen und/oder einstellbaren Schwellwert verglichen werden können.

Relativ zu dem Schwellwert kann eine Änderung des Zustands eines zu bedienenden Geräts erfolgen, beispielsweise einer Recheneinheit oder einer Messvorrichtung, eines Fahrzeugs oder einer anderen Einrichtung.

Bei der Verwendung von gekrümmten Bildschirmen besteht in der Regel die Schwierigkeit, die in einer Recheneinheit vorhandenen grafischen Daten zur Darstellung eines Objektes, die auch in vektorieller Form vorliegen können, mittels einer Abbildungsfunktion auf den gekrümmten Bildschirm abzubilden. In einigen Fällen ist es vorteilhaft, zunächst ein virtuelles Ur-Bild zu erzeugen, das häufig auf einem kartesischen Koordinatensystem beruht. Die Abbildungsfunktion wird zur Abbildung der grafischen Daten, die in einer Recheneinheit vorliegen, verwendet. Die Daten können direkt auf den gekrümmten Bildschirm abgebildet werden. Die Abbildungsfunktion kann auch zur Abbildung der auf einem virtuellen oder reellen Ur-Bild in einem kartesischen Koordinatensystem dargestellten Daten auf den gekrümmten Bildschirm eingesetzt werden. Die Abbildungsfunktion ist bevorzugt wenigstens teilweise eineindeutig und bijektiv.

Bei der Verwendung des Markierungsbereichs als Lupenfunktion mit einer geänderten Auflösung, gibt es Bereiche innerhalb des Markierungsbereichs, in denen die Abbildungsfunktion nichtlinear ist. Sie ist hier jedenfalls teilweise nicht eineindeutig und somit nicht umkehrbar. Folglich existiert keine inverse Abbildungsfunktion. In diesem Fall kann auf die in der Recheneinheit hinterlegten grafischen Daten zurückgegriffen werden, um die ursprünglichen Objekte wieder auf dem Bildschirm darzustellen, sobald der Markierungsbereich zu einer anderen Position bewegt wird. Die Vorrichtung zur Gestenerkennung kann deshalb auch eine Speichereinheit umfassen.

Die Vorrichtung zur Gestensteuerung kann Teil eines zu bedienenden Gerätes sein, wie etwa eines Fahrzeugs, eines Flugzeugs oder eines Schiffes. Besonders bevorzugt werden wenigstens Teile oder Einheiten oder Aggregate des zu bedienenden Gerätes, insbesondere des Fahrzeuges, durch die Vorrichtung zur Gestenerkennung bedient oder deren Zustand verändert.

Der Bildschirm kann Teil des Fahrzeugcockpits sein und somit Teile des Armaturenbretts ersetzen. Der Bildschirm kann nahtlos in das Armaturenbrett integriert sein. Die Schalter und Taster, beispielsweise zur Steuerung der Temperatur oder Lüftung oder des Lichtes, können auf dem gekrümmten Bildschirm dargestellt werden. Die virtuellen Schalter auf dem Bildschirm können durch eine Gestensteuerung, bevorzugt durch eine berührungslose Gestensteuerung bedient werden.

In einer bevorzugten Ausführungsform der Vorrichtung kann ein gekrümmter Bildschirm als Türgriff oder Türöffner ausgebildet sein. Er kann zusätzlich ein topologisches Geschlecht größer Null aufweisen. Der gekrümmte Bildschirm kann beispielsweise in Fahrzeugen als Türgriff für eine der Fahrzeugtüren oder die Heckklappe oder den Kofferraum oder die Motorhaube ausgebildet sein, oder in Gebäuden, Schränken oder anderen Gegenständen eingesetzt werden, die eine zu öffnende Tür oder ähnliches aufweisen. Beispielsweise könnte er bei Haushaltsgeräten wie z.B. Waschmaschinen, Geschirrspülern, Kühlschränken eingesetzt werden.

Die Kombination aus Gestenerkennungseinheit und gekrümmten Bildschirm hat den Vorteil, dass bei Annäherung einer Hand ein optisches Signal direkt auf den Bildschirm ausgegeben werden kann. Durch bestimmte Gesten oder durch Erkennung charakteristischer Benutzermerkmale beispielsweise an der Hand, wie eines Fingerabdrucks, kann die Berechtigung zum Öffnen und Abschließen der Fahrzeugtür oder des Kofferraumdeckels erkannt werden. Die Berechtigung kann optisch angezeigt werden, ebenso das Fehlen einer Berechtigung.

Der Bildschirm kann wenigstens in Teilen flexibel sein. Alternativ können sehr kleine Bildschirme verwendet werden, die beispielsweise in das Lenkrad, Türöffner oder andere Fahrzeugbauteile integriert werden. Eine einfache Anpassung kann durch die beliebig gekrümmte Form der Bildschirme oder deren Flexibilität erfolgen.

Die Erfindung wird ergänzend anhand eines besonderen Ausführungsbeispiels näher erläutert. Die dort aufgeführten Merkmale und Besonderheiten der erfindungsgemäßen Vorrichtung sowie besondere Ausführungsformen können nicht nur in dem in den Figuren dargestellten Zusammenhang vorhanden sein, sondern auch einzeln oder in anderen Kombinationen. Es wird explizit darauf hingewiesen, dass diese Merkmale auch einzeln offenbart werden, wenngleich sie im Zusammenhang zur Verbesserung des Verständnisses dargestellt sind.

Es zeigen:
- Fig. 1: eine schematische Ansicht eines Fahrzeuginnenraums mit Armaturenbrett und gekrümmten Bildschirm als Teil der erfindungsgemäßen Vorrichtung;
- Fig. 2: den gekrümmten Bildschirm aus Figur 1 in der Aufsicht;
- Fig. 3: den gekrümmten Bildschirm aus den Figuren 1 und 2 schematisch im Querschnitt;
- Fig. 4: den Querschnitt aus Fig. 3 mit einem orthogonalen, nicht kartesischen Koordinatensystem mit einer z-Koordinatenbestimmung durch Lotbildung;
- Fig. 5: den Querschnitt aus Fig. 3 mit einem orthogonalen nicht kartesischen Koordinatensystem mit einer z-Koordinatenbestimmung durch Wegintegration längs einer vertikal stehenden orthogonalen Koordinatenlinie, wobei ab einem gewissen Abstand zₐ vom Bildschirm die Koordinatenflächen nicht mehr und/oder weniger von der Fom des Bildschirms abhängen;
- Fig. 6: den Querschnitt aus Fig. 3 mit einem orthogonalen nicht kartesischen Koordinatensystem mit einer z-Koordinatenbestimmung durch Wegintegration längs einer nicht zur Bildschirmfläche koplanaren Koordinatenlinie, wobei eine Koordinatenlinie sich aufspaltet und das Koordinatensystem einen Raumbereich unmittelbar über dem Bildschirm nicht erfasst;
- Fig. 7: den Querschnitt aus Fig. 3 mit einem orthogonalen nicht kartesischen Koordinatensystem mit einer z-Koordinatenbestimmung durch Wegintegration längs einer nicht zur Bildschirmfläche koplanaren Koordinatenlinie, wobei eine Koordinatenlinie sich aufspaltet und das Koordinatensystem einen vom Bildschirm beabstandeten Raumbereich nicht erfasst;
- Fig. 8: einen Bildschirm aus Fig. 3 mit vier Sensorkoordinatensystemen von vier in den Bildschirm integrierten Sensoren;
- Fig. 9: einen Querschnitt des Bildschirms auf Fig. 3 mit drei auf dem Bildschirm dargestellten Bildobjekten und deren zugehörigen Gestenerkennungskoordinatensystemen;
- Fig. 10: ein Ablaufdiagramm des erfindungsgemäßen Verfahrens;
- Fig. 11: zwei Schalter als grafische Objekte auf dem gekrümmten Bildschirm;
- Fig. 12: einen auf dem gekrümmten Bildschirm realisierten Schiebeschalter;

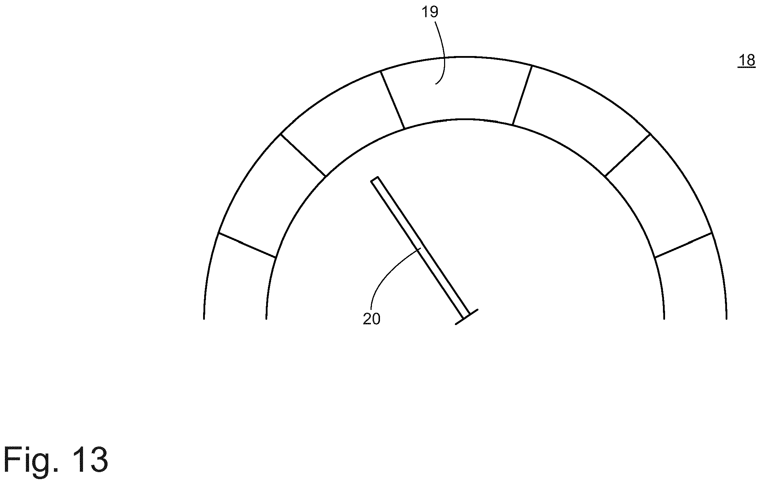

- Fig. 13: ein Anzeigeinstrument, das als grafisches Objekt auf dem gekrümmten Bildschirm realisiert ist; und
- Fig. 14: einen beispielhaften, aus vielen kleinen Bildschirmen zusammengesetzten Türgriff.

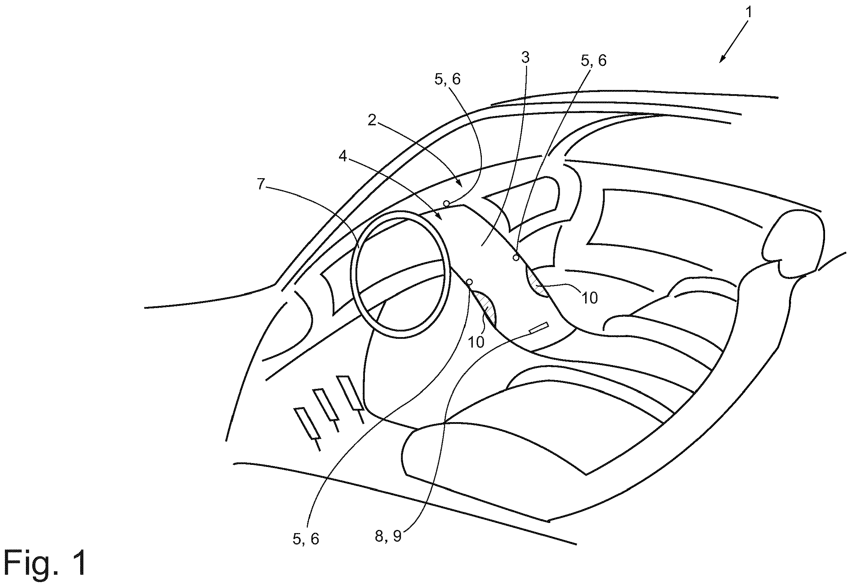

Figur 1 zeigt einen Ausschnitt eines Fahrzeugs 1 mit dem Fahrzeugcockpit einschließlich des Armaturenbretts 2. Ein Bildschirm 3 ist in das Armaturenbrett 2 integriert und bedeckt beispielsweise teilweise die Mittelkonsole. Bevorzugt ist der Bildschirm 3 L-förmig, wie dargestellt. Der Bildschirm 3 erstreckt sich auch hinter einem Lenkrad 7. Der Bildschirm 3 ist Teil der erfindungsgemäßen Vorrichtung zur Gestenerkennung 4, die eine Gestenerkennungseinheit 5 in Form von Gestensensoren (Sensoren) 6 einschließt. Die Gestensensoren 6 sind bevorzugt in der Nähe des Bildschirms 3 oder hinter dem Bildschirm 3 angeordnet. Auf diese Weise lässt sich ein Eingabeobjekt und die Bewegung und Änderung der Position eines Eingabeobjekts erkennen. Typischerweise ist das Eingabeobjekt die Hand des Bedienenden, beispielsweise des Fahrers oder des Beifahrers. Die Erkennungssensoren 6 sind bevorzugt derart angeordnet, dass eine Geste der Hand des Bedienenden gut zu erfassen bzw. zu ermitteln ist. Bevorzugt erfolgt die Bedienung der Vorrichtung zur Gestenerkennung 4 bei Linkslenkern mit der rechten Hand des Fahrers und bei Rechtslenkern entsprechend mit der linken Hand.

Bevorzugt und typischerweise weist der Bildschirm 3 der Vorrichtung zur Gestenerkennung 4 wenigstens zwei Krümmungen auf. Die erste Krümmung liegt im Bereich des Armaturenbretts 2 und ist vorzugsweise so gewählt, dass sie der Krümmung des Armaturenbretts entspricht. Dabei erfolgt die Krümmung um eine gedachte Achse, die sich zwischen der rechten und linken Fahrzeugaußenseite entlang des Armaturenbretts 2 erstreckt. Die zweite Krümmung erstreckt sich um eine ebenso orientierte Krümmungsachse. Bevorzugt ist die erste Krümmung zur zweiten Krümmung entgegengesetzt. Besonders bevorzugt folgt die zweite Krümmung der Form der Mittelkonsole und verläuft von einer Schrägen, die vom Armaturenbrett in Richtung der traditionellen Position eines Gangschalthebels verläuft, bis in eine fast horizontale Ebene am unteren Ende des Bildschirms 3.

Neben diesen beiden Krümmungen kann der Bildschirm weitere Krümmungen umfassen. Bevorzugt ist eine weitere Krümmung um eine Krümmungsachse, die sich vorzugsweise entlang der gerade beschriebenen Schrägen erstreckt, so dass der Bildschirm 3 der Vorrichtung zur Gestenerkennung 4 zum Fahrer des Fahrzeugs 1 hin geneigt und orientiert ist.

In einer bevorzugten Ausführungsform schließt der Bildschirm 3 Öffnungen 8 ein, die beispielsweise als runde oder eckige Löcher oder als Aussparungen 9 ausgebildet sein können. Die in Figur 1 explizit gezeigte Aussparung 9 ermöglicht beispielsweise den Zugang zu einer Schnittstelle, um ein Datenspeichergerät wie beispielsweise einen USB-Stick anzuschließen.

Bevorzugt weist der Bildschirm auch Aussparungen auf, die beispielsweise Lüftungsschlitze 10 sein können. Beispielsweise sind die Lüftungsschlitze 10 am seitlichen Rand des Bildschirms 3 angeordnet. Die Form der Aussparungen 9 ist nahezu beliebig. Auf diese Weise können Luftauslässe in dem Armaturenbrett nach wie vor vorhanden sein, so dass eine geeignete Klimatisierung des Innenraums erfolgen kann.

Selbstverständlich sind auch weitere Krümmungen möglich. Die Krümmungen können um nahezu beliebige Krümmungsachsen oder auch in anderer Form erfolgen. Der Topologie des Bildschirms 3 sind in Bezug auf die Komplexität keine Grenzen gesetzt. Somit lässt sich der Bildschirm 3 in ein beliebiges Design des Armaturenbretts integrieren und an dieses Design anpassen.

Bevorzugt wird das Gehäuse 12 für den Bildschirm 3 durch das Armaturenbrett 2 gebildet. Zwischen Bildschirm 3 und Armaturenbrett 2 entsteht eine Begrenzungskante 11. Bevorzugt ist wenigstens eine der Begrenzungskanten 11 derart ausgebildet, dass die Bildschirmoberfläche und die Oberfläche des Armaturenbretts 2 die Begrenzungskante 11 bilden. Bevorzugt ist die Krümmung der Bildschirmoberfläche und die Krümmung der Oberfläche des Armaturenbretts 2 am Übergang, also an der Begrenzungskante 11, im Wesentlichen gleich. Hierdurch ergibt sich bevorzugt ein nahezu nahtloser Übergang.

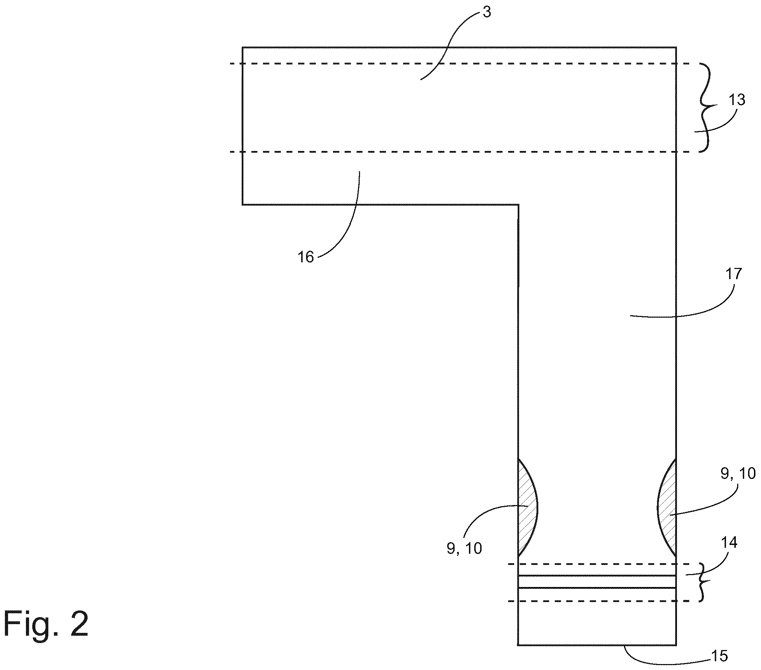

Figur 2 zeigt den Bildschirm 3 aus der Mittelkonsolenperspektive nach vorne blickend. Der Bildschirm 3 weist beispielsweise einen oberen Krümmungsbereich 13 und einen unteren Krümmungsbereich 14 auf. Im oberen Krümmungsbereich 13 kann der Bildschirm 3 um eine horizontal verlaufende Achse gekrümmt sein und eine Neigung in Richtung Windschutzscheibe haben. Im unteren Bereich 14 kann der Bildschirm 3 eine gegenläufige Krümmung aufweisen. Die Krümmung kann entlang einer sich horizontal erstreckenden Achse erfolgen, so dass das untere Ende 15 des Bildschirms bevorzugt nahezu waagerecht verlaufen kann. Weitere Krümmungen innerhalb des Bildschirms 3, insbesondere zwischen dem oberen Krümmungsbereich 13 und dem unteren Krümmungsbereich 14 sind möglich und teilweise notwendig.

In Figur 2 sind die beiden Aussparungen 9 an den Seiten des Bildschirms 3 zu sehen, die die Lüftungsschlitze 10 integrieren.

Im Wesentlichen kann der Bildschirm 3 in einen oberen, sich bevorzugt horizontal erstreckenden ersten Anzeigebereich 16 und in einen sich bevorzugt im Wesentlichen vertikal erstreckenden zweiten Anzeigebereich 17 unterteilt werden, wobei beide Anzeigebereiche auch Bedienbereiche umfassen können.

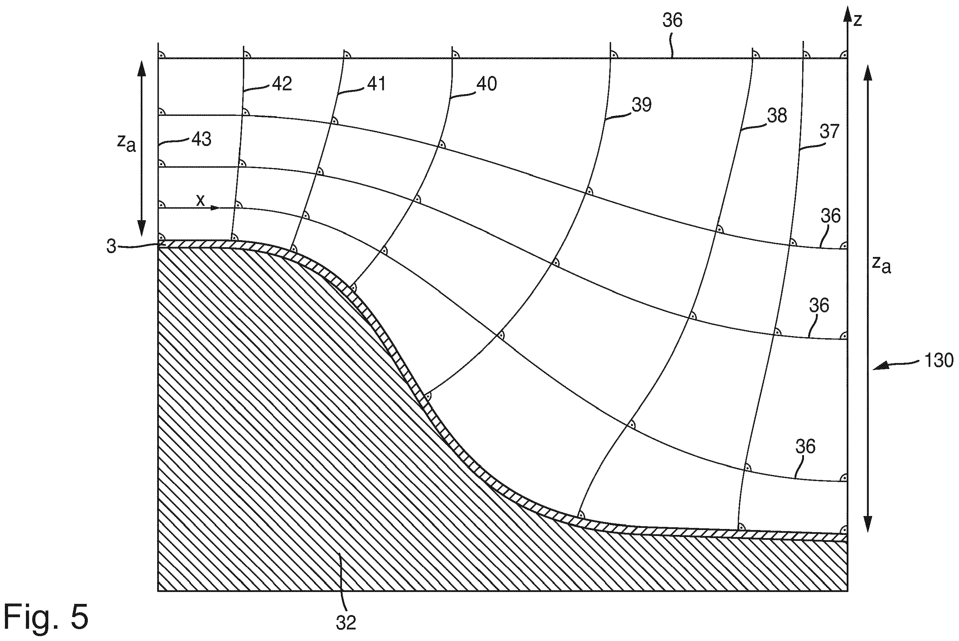

Im oberen Anzeigebereich 16 können klassischerweise gemäß Figur 5 in einem Fahrzeug 1 Rundinstrumente 18 angeordnet sein. Das gezeigte analoge Rundinstrument hat eine Skala 19 und einen Zeiger 20. Beispielsweise können derartige Rundinstrumente die Geschwindigkeit, die Drehzahl, eine Temperatur oder einen Tankinhalt anzeigen. Andere grafische Objekte und Messinstrumente sind ebenfalls möglich. Im ersten Anzeigebereich 16 oberhalb des sich vertikal erstreckenden zweiten Anzeigebereichs 17 kann ein größerer Bereich vorgesehen sein, der beispielsweise für die Navigation und zur Darstellung von Karten verwendet werden kann, beispielsweise um das Navigationssystem durch berührungslose Gesten zu bedienen, oder um beispielsweise in eine Karte ein- oder auszuzoomen oder um eine Auswahl zu treffen, beispielsweise eine Adresse einzugeben oder Ähnliches. Dem Nutzer kann dabei eine Umpositionierung von nicht sicherheitsrelevanten virtuellen Objekten überlassen werden.

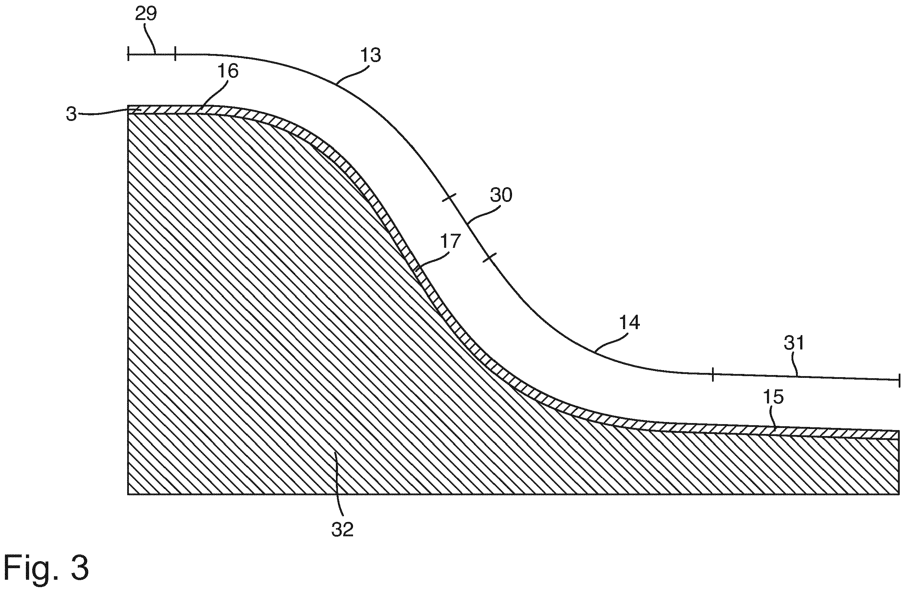

Figur 3 zeigt den gekrümmten Bildschirm 3 aus den Figuren 1 und 2 schematisch im Querschnitt. Der Bildschirm 3 wird typischerweise auf einem hier nur schematisch dargestellten Untergrund 32 montiert. Er weist beispielsweise den ersten Anzeigebereich 16 und bevorzugt den zweiten Anzeigebereich 17 auf. Das untere Ende 15 des Bildschirms 3 kann einen nahezu flachen Bereich 31 haben. In einem unteren Bereich 14 kann in diesem Beispiel der Bildschirm 3 eine erste Krümmung aufweisen. Sie ist einer zweiten Krümmung in einem oberen Bereich 13, auch Krümmungsbereich genannt, bevorzugt entgegengesetzt. Das Vorzeichen eines ersten Krümmungsparameters des ersten Bereichs 14 weist ein anderes Vorzeichen auf als ein zweiter Krümmungsparameter des zweiten Bereichs 13. Die erste Krümmung hat folglich ein anderes Vorzeichen als die zweite Krümmung. In diesem Beispiel kann der Bereich des oberen Endes 29 des Bildschirms 3 ebenso wie das untere Ende 31 flach ausgeführt sein. Ebenso kann der Übergang zwischen dem oberen Bereich 13 und dem unteren Bereich 14 in diesem Beispiel keine wesentliche Krümmung aufweisen.

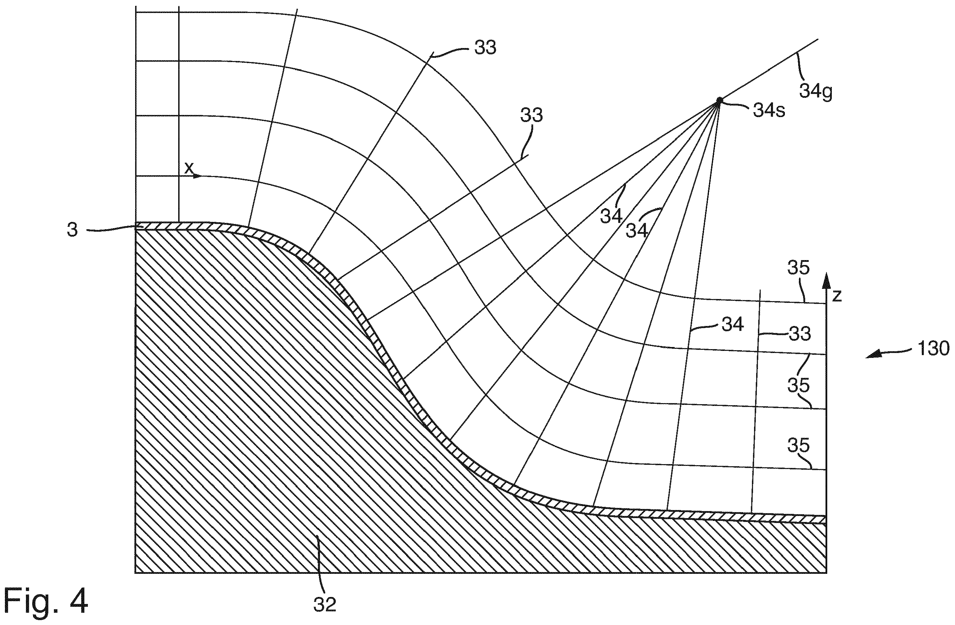

Figur 4 zeigt den Querschnitt aus Figur 3 mit einem orthogonalen, nicht kartesischen Gestenerkennungskoordinatensystem mit einer Z-Koordinatenausbildung. Diese wird durch Lotbildung von einem Raumpunkt auf die Oberfläche des Bildschirms 3 erzeugt. Die Z-Koordinatenlinien 33 sind als gerade Linien ausgeführt und stehen senkrecht auf der Bildschirmfläche des Bildschirms 3. Durch die konkave Krümmung im ersten Krümmungsbereich 14 können sich einige der Z-Koordinatenlinien 33, nämlich die Koordinatenlinien 34, in einem Punkt (Schnittpunkt 34s) schneiden, der von der Oberfläche des Bildschirms 3 beabstandet ist.

Für Z-Koordinaten (Punkte in Z-Richtung) mit einem Abstand größer als der Z-Abstand des Schnittpunkts 34s ist eine eindeutige Projektion auf die Bildschirmoberfläche des Bildschirms 3 nicht mehr möglich. Daher werden bevorzugt ab diesem Schnittpunkt beispielsweise die Koordinatenlinien 34 zu einer einzelnen Koordinatenlinie 34g zusammengefasst.

Orthogonal zu den Z-Koordinatenlinien 33, 34 verlaufen Koordinatenlinien 35, die sich im Wesentlichen parallel zu der Oberfläche des Bildschirms 3 erstrecken. Die Koordinatenflächen (zu den Koordinatenlinien 35) ergeben sich dann als Flächen gleichen Abstands von der Oberfläche des Bildschirms 3 bezogen auf das Gestenerkennungskoordinatensystem 130, 131, 132, wie in Figur 4 gezeigt.

Figur 5 zeigt den Querschnitt aus Fig. 3, nun aber mit einem orthogonalen, nicht kartesischen Koordinatensystem, jedoch mit einer Z-Koordinatenausbildung, die durch Wegintegration längs einer vertikal stehenden orthogonalen Koordinatenlinie 37 bis 43 verläuft. Ab einem gewissen Abstand zₐ kann die Form der Koordinatenflächen bevorzugt nicht mehr bzw. ebenso bevorzugt zumindest weniger von der Form des Bildschirms und seiner Oberfläche abhängen.

Beispielsweise kann die äußerste (am weitesten von der Oberfläche des Bildschirms beabstandete) Koordinatenfläche 36a eine planare Ebene bilden. Die Z-Koordinatenlinien 37 bis 43 des Gestenerkennungskoordinatensystems bilden daher Kurven, die zwar senkrecht auf der Oberfläche des Bildschirms 3 auftreffen, aber eben nicht mehr gerade sind, sondern gebogen. Der Z-Abstand kann bevorzugt durch Integration längs der jeweiligen Z-Koordinatenline 37 bis 43 ermittelt werden. Die Koordinatenflächen 36 gleichen Z-Abstands entsprechen dann in der Nähe der Oberfläche des Bildschirms 3 im Wesentlichen dessen Form und verlieren bevorzugt, wie in diesem Beispiel gezeigt, mit zunehmendem Z-Abstand dessen Form (Form des Bildschirms) und gehen in die Form einer flache Ebene 36a über.

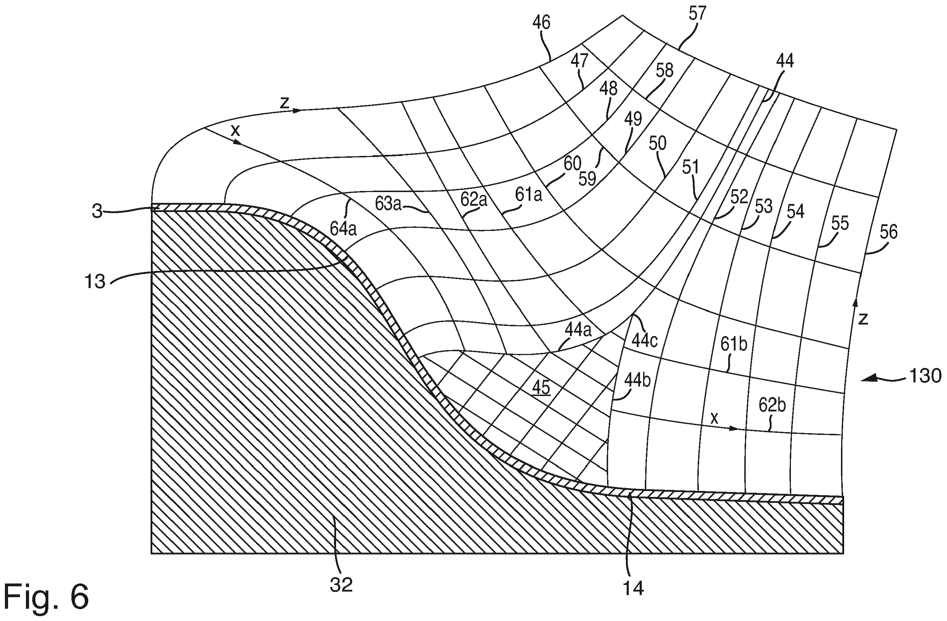

In Figur 6 ist ein weiteres bevorzugtes Gestenerkennungskoordinatensystem 130, 131, 132 gezeigt. Figur 6 stellt den Querschnitt des Bildschirms 3 aus Figur 3 dar, mit einem orthogonalen, nicht kartesischen Gestenerkennungskoordinatensystem, bei dem die Z-Koordinatenausbildung bevorzugt durch Wegintegration längs einer nicht zur Bildschirmfläche koplanaren Koordinatenlinie 46 bis 56 erzeugt wird. Bevorzugt kann sich, wie in diesem Beispiel gezeigt, eine Koordinatenlinie 44 in zwei Koordinatenlinien 44a, 44b aufspalten. Das Koordinatensystem kann somit einen Raumbereich 45 nicht erfassen. Beispielsweise ist dieser Raumbereich 45 unmittelbar über dem Bildschirm 3 zwischen diesen beiden aufgespalteten Koordinatenlinien 44a, 44b angeordnet. In einem solchen Raumbereich können vorzugsweise andere Bedienelemente platziert werden, die keiner Gestensteuerung bedürfen. Beispielsweise ist es denkbar, hier bevorzugt Schalter und/oder Lüftungsauslässe zu platzieren oder etwa stets vorhandene Anzeigen anzuordnen.

Die Aufspaltung der Z-Koordinatenlinie 44 führt zu einer Aufspaltung der Koordinatenflächen. Die Koordinatenflächen 57, 58, 59, 60, die in diesem Beispiel weiter als der Aufspaltpunkt 44c von der Oberfläche des Bildschirms 3 entfernt sind, verhalten sich beispielsweise so, wie die Koordinatenflächen aus Figur 5. Die weiteren Koordinatenflächen (61a bis 64a und 61b, 62b) werden bevorzugt entweder, wie in diesem Beispiel gezeigt, aufgespalten oder sie können z. B. ein Loch aufweisen, das den ausgesparten Bereich 45 umgibt. Bei aufgespaltenen Koordinatenflächen besteht die Möglichkeit, eine unterschiedliche Abstandsmetrik für unterschiedliche Bildschirmbereiche zu verwirklichen.

Die in diesem Beispiel angedeutete unterschiedliche Abstandsmetrik im oberen Bereich 13 des Bildschirms 3 im Vergleich zum unteren Bereich 14 des Bildschirms 3 kann sich etwa, wie in diesem Beispiel gezeigt, so äußern, dass für einige Koordinatenflächen 63a, 64a im oberen Bereich 13 des Bildschirms 3 keine Entsprechungen im unteren Bereich 14 des Bildschirms 3 vorliegen. Bevorzugt ist die Länge der beiden Koordinaten-Linien 44a, 44b im Punkt des Zusammentreffens (Aufspaltpunkt 44c) gleich, um eine eindeutige Koordinate erzielen zu können. Daher ist es bevorzugt sinnvoll, die Z-Koordinaten der im unteren Bereich 14 dieses Beispielbildschirms 3 durch Integration entlang der Z-Koordinatenlinien 52, 53, 54, 55, 56 ermittelten Z-Koordinaten mit einem Offset zu versehen, beispielsweise durch Addition.

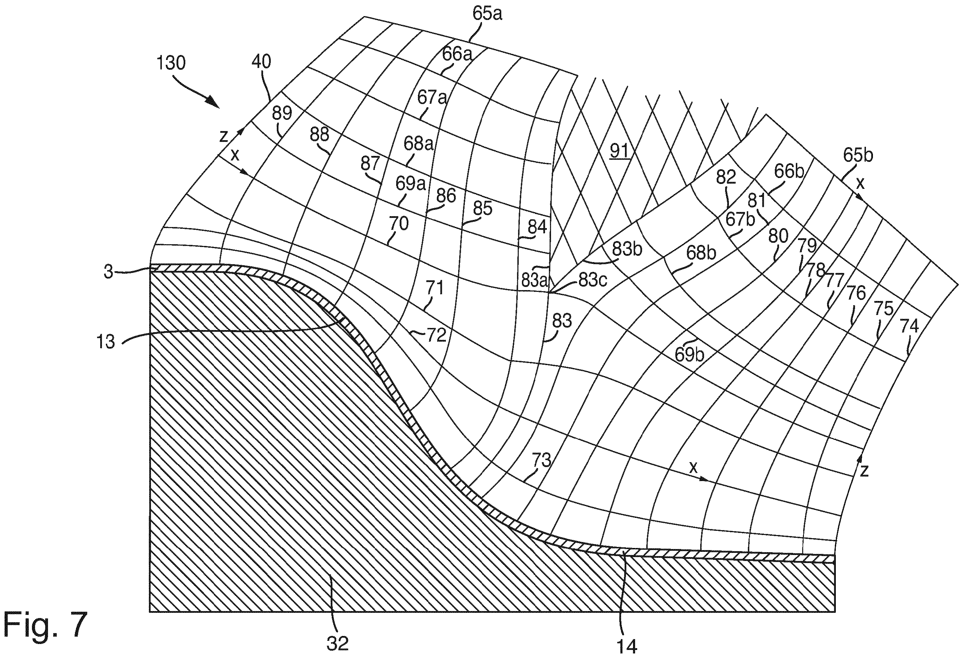

Figur 7 zeigt den gekrümmten Bildschirm aus Figur 3 im Querschnitt gemeinsam mit einem orthogonalen, nicht kartesischen Koordinatensystem für die Gestenbestimmung. Das Gestenerkennungskoordinatensystem 130 hat eine Z-Koordinatenausbildung, die durch Wegintegration längs einer nicht zur Oberfläche des Bildschirms 3 koplanaren Koordinatenlinie gebildet wird. Eine Koordinatenlinie 83 kann sich ab einem bestimmten Mindestabstand (Aufspaltpunkt 83c) in zwei separate Koordinatenlinien 83a und 83b aufspalten. Das Gestenerkennungskoordinatensystem 130 kann dann beispielsweise einen Raumbereich 91, der zum Bildschirm 3 beabstandet ist, nicht erfassen. Die Aufspaltung kann hierbei einen nicht sensitiven Bereich 91 zur Folge haben, der, wie in diesem Beispiel gezeigt, jedoch von der Oberfläche des Bildschirms 3 fortgerichtet sein kann. Die Z-Abstände werden in diesem Gestenerkennungskoordinatensystem 130 wieder durch Integration längs der Z-Koordinatenlinien ermittelt.

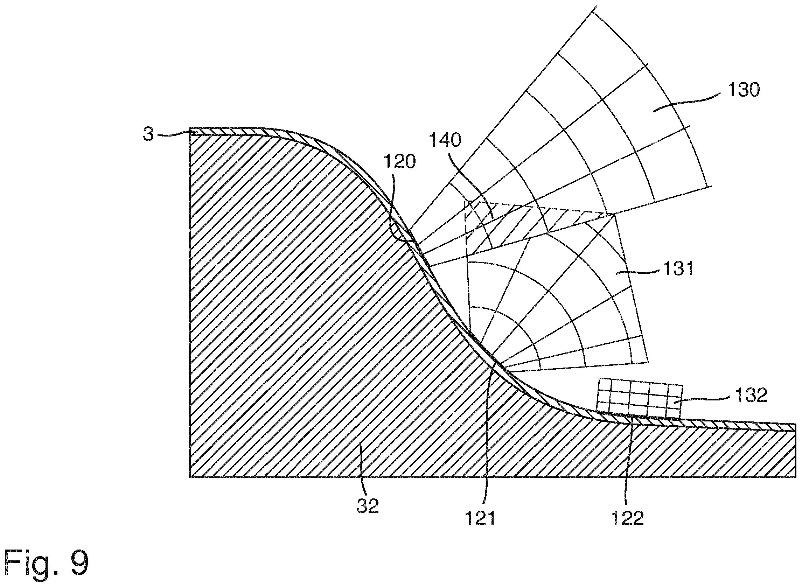

Sofern die aufgespaltene Koordinatenlinie 83 als Koordinatenlinien 83a und 83b in einem Punkt wieder zusammengeführt wird, könnte bei unterschiedlichen Metriken wieder ein geeigneter Offset hinzuaddiert werden. Der Punkt der Zusammenführung ist im Beispiel gemäß Figur 7 nicht dargestellt. Die verwendeten Metriken und/oder die hinzuaddierten Offsets können von der X- und/oder der Y-Koordinate abhängig sein.
Durch die Verwendung eines derartigen Gestenerkennungskoordinatensystems 130 mit einer Aufspaltung einer Koordinatenlinie 83 und Schaffung eines entsprechenden Raumbereichs 91 können Bereiche oder Räume geschaffen werden, die bedienfrei sind, mit anderen Worten Bereiche, in denen keine Bedienung eines Gerätes oder Vorrichtung durch Gesten möglich ist. Bevorzugt können somit also bestimmte Raumareale bewußt und gewollt von der Gestenerkennung ausgeschlossen werden. Es sind viele Anwendungsfälle denkbar, in denen ein derartiges Areal vorteilhaft und gewünscht ist.
Die Struktur des Gestenerkennungskoordinatensystems kann beispielsweise auch von der Struktur oder Art oder dem Inhalt der dargestellten virtuellen Bildobjekte auf dem Bildschirm 3, wie beispielsweise Fenster auf dem Bildschirm 3, abhängen. Jedes auf dem Bildschirm 3 dargestellte Objekt kann bevorzugt über ein eigenes Gestenerkennungskoordinatensystem 130 verfügen. In einer besonderen Ausführungsform können die Form und Ausgestaltung der jeweiligen Gestenerkennungskoordinatensysteme 130, 131, 132 vorzugsweise auch vom Zustand des dem Bildobjekt und/oder dem Fenster zugrundeliegenden Programms abhängen. Bevorzugt kann eine Abhängigkeit von der Positionierung des Bildobjekts innerhalb des dargestellten virtuellen Raumes abhängen. Hierbei kann typischerweise zusätzlich auch die Priorität oder Hierarchie der Bildobjekte beeinflussen, welches objektspezifische Gestenerkennungskoordinatensystem 130, 131, 132 sich an welchem Raumpunkt durchsetzt und verwendet wird. Es kann aber auch eine Abhängigkeit von der Position des Gesteneingabeobjekts im Raum vor dem Bildschirm 3, also innerhalb des Gestenerkennungskoordinatensystems 130, 131, 132 die Auswahl des jeweiligen Gestenerkennungskoordinatensystems beeinflussen. Somit kann eine Abhängigkeit bestehen, welches der mehreren Gestenerkennungskoordinatensysteme 130 131, 132 verwendet wird, um eine Geste zu erkennen und eine Aktion auszulösen, vgl. Figur 9.

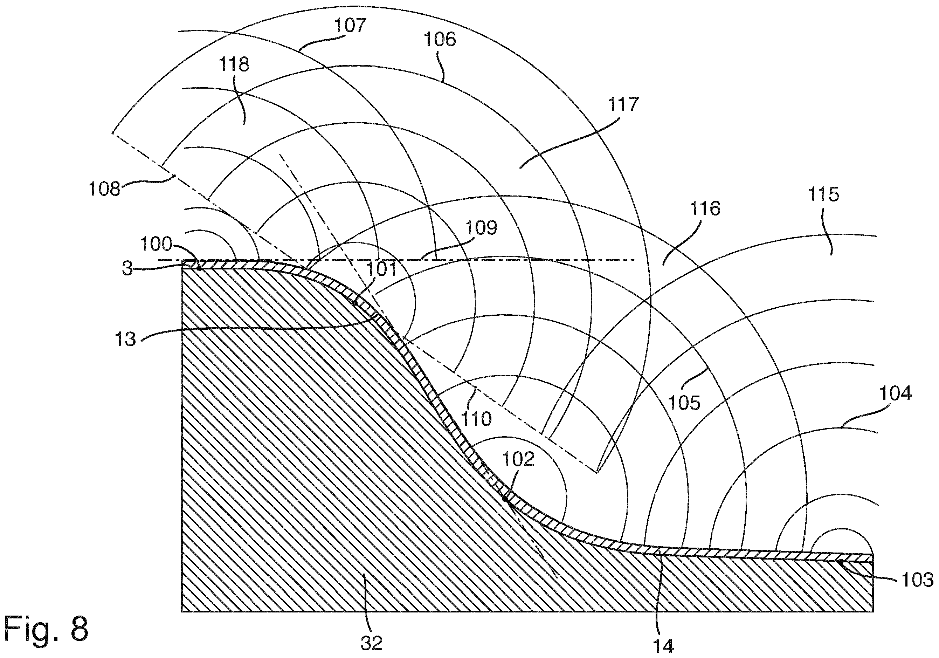

Figur 8 zeigt beispielhaft den Bildschirm 3 aus Figur 3 mit vier Sensoren 100 bis 103, die in dem Bildschirm positioniert sind. Für jeden der Sensoren 100 bis 103 kann ein eigenes Sensorkoordinatensystem 115 bis 118 existieren. Die Sensoren 100 bis 103 können derart ausgeführt sein, dass sie ausschließlich den Abstand zu einem Objekt (Gesteneingabeobjekt) im Raum vor dem Bildschirm 3 bestimmen können.
Bevorzugt ist jedem Sensor 100 bis 103 ein Sensorkoordinatensystem 115 bis 118 zugeordnet, das bevorzugt sphärische Koordinatenflächen 104 bis 107 aufweist. Um eine dreidimensionale Wirkung erzielen zu können, sind weitere Sensoren notwendig, die nicht in der Zeichnungsebene der Figur 8 liegen und daher nicht dargestellt sind.
Bevorzugt ist die Verwendung von mehr als drei bzw. vier Sensoren 100 bis 103, um sicherzustellen, dass wenigstens drei Sensoren ein Gesteneingabeobjekt (Objekt) erfassen. In dem gezeigten Beispiel reicht die Verteilung der Sensoren 100 bis 103 beispielsweise nicht aus, um Bereiche zu vermeiden, in denen nicht immer mindestens drei Sensoren das Eingabeobjekt erfassen können.
Abschattungen, die durch eine Krümmung des Bildschirms 3 hervorgerufen werden können, können das erfassbare Gesichtsfeld (Messfeld) der Sensoren 100 bis 103 begrenzen. Die Sensorkoordinatensysteme 115 bis 118 der einzelnen Sensoren 100 bis 103 können daher bevorzugt zumindest teilweise durch Sensorbereichsgrenzen 108 bis 110 begrenzt sein. Die Sensorbereichsgrenzen begrenzen das Messfeld der einzelnen Sensoren 100 bis 103, in denen die Sensoren ein Objekt erkennen bzw. den Abstand zu einem Objekt erfassen können. Aus den Werten (Koordinaten) dieser Sensorkoordinatensysteme können bevorzugt durch eine zentrale Recheneinheit oder eine Gestenerkennungseinheit 5 die Koordinaten für das Gesteneingabeobjekt in einem Bezugskoordinatensystem (z. B. des Bildschirms 3) errechnet werden. Dann können die Koordinaten einem oder einem der Gestenerkennungskoordinatensysteme 130, 131, 132 zugeordnet und in dieses umgerechnet (transformiert) werden. Die Auswahl kann nach einem Algorithmus erfolgen, der beispielsweise die Topographie des Bildschirms 3, die einzelnen Gestenerkennungskoordinatensysteme 130, 131, 132 und deren Überlappungen 140, abgeschattete Gebiete sowie den Abstand zu dem auf dem Bildschirm dargestellten Bildobjekt und gegebenenfalls dessen Hierarchie und/oder Priorität oder Wichtigkeit berücksichtigen. Die Auswahl der Gestenerkennungskoordinatensysteme 130 bis 132 kann folglich bevorzugt auch situationsabhängig, also abhängig vom Inhalt der auf dem Bildschirm 3 dargestellten Bildobjekte erfolgen.

In Figur 9 ist ein Bildschirm 3 im Querschnitt gezeigt, der im wesentlichen dem Bildschirm aus Figur 3 entspricht. Der Bildschirm 3 weist beispielhaft drei auf ihm dargestellte virtuelle Bildobjekte 120 bis 122 auf, die beispielsweise ein Fenster umfassen können oder in einem Fahrzeug beispielsweise Bedienelemente, wie Anzeige- und Bedienteile für das Radio oder die Klimaanlage sein können. Jedem der dargestellten virtuellen Bildobjekte 120 bis 122 kann je ein Gestenerkennungskoordinatensystem 130 bis 132 zugeordnet sein, das jeweils eine spezifische Form, Ausrichtung, Begrenzung und Lage im Raum aufweist. Bevorzugt sind die Koordinatenflächen entsprechend der zu erwartenden Erkennungsaufgabe optimiert und durch Software festgelegt. Bevorzugt hängen in mindestens einem Zustand die Koordinatenflächen von der Erkennungsaufgabe ab. Sie unterscheiden sich bevorzugt in zumindest zwei Zuständen des Bildojekts für das zu erkennende Objekt voneinander.

Beispielsweise kann ein Koordinatensystem vergrößert werden, wenn das Bildobjekt für eine Eingabe aktiviert wird. Die Position und Orte der Bildobjekte auf dem Bildschirm können voneinander abweichen oder überlappen.

In einer bevorzugten Ausführungsform sind nicht nur die virtuellen Bildobjekte auf dem Bildschirm 3 dargestellt, sondern auch die Sensoren 100 bis 103 in dem Bildschirm 3 integriert. Hierbei können die Positionen und Orte der Sensoren 100 bis 103 der dargestellten Bildobjekte 120 bis 122 auf dem Bildschirm voneinander abweichen, sich überlappen oder identisch sein. Es ist vorteilhaft, wenn ein Sensor in der Nähe eines Bildobjekts angeordnet ist.

Die Gestenerkennungskoordinatensysteme 130 bis 132 können sich beispielsweise überlappen, wie in Figur 9 gezeigt. Beispielsweise kann von dem ersten Gestenerkennungskoordinatensystem 130 des ersten virtuellen Bildobjekts 120 und dem zweiten Gestenerkennungskoordinatensystem 131 des zweiten virtuellen Bildobjekts 121 ein Überlappungsbereich 140 gebildet werden. Befindet sich ein Gesteneingabeobjekt innerhalb des Überlappungsbereichs 140 entsteht eine Zweideutigkeit.

Bevorzugt muss also das Gesteneingabeobjekt einem der Gestenerkennungskoordinatensysteme 130, 131 zugeordnet werden. Um das Problem der Zweideutigkeit im Überlappungsbereich 140 zu lösen, stehen bevorzugt verschiedene Möglichkeiten zur Verfügung. Im einfachsten Fall kann ein Gestenerkennungskoordinatensystem, beispielsweise das erste Gestenerkennungskoordinatensystem 130 bevorzugt eine höhere Priorität aufweisen als das zweite Gestenerkennungskoordinatensystem 131. Daher können Gestenbefehle, die von einem Gesteneingabeobjekt, das beispielsweise im Überlappungsbereich 140 positioniert ist, erzeugt und von den Sensoren 100 bis 103 erkannt werden, bevorzugt dem ersten virtuellen Bildobjekt 120 mit dem Gestenerkennungskoordinatensystem 130 zugeordnet und von dem zweiten virtuellen Bildobjekt 121 mit dem Gestenerkennungskoordinatensystem 131 ignoriert werden. Das zweite Gestenerkennungskoordinatensystem 131 wird in diesem Fall bevorzugt um den Überlappungsbereich 140 verkleinert. Der Überlappungsbereich 140 kann dem ersten Gestenerkennungskoordinatensystem 130 vollständig zugeschlagen werden.

Andere Möglichkeiten, um das Problem der Zweideutigkeit des Überlappungsbereichs 140 zu lösen, können sich aus einer Bewertung der Position des Gesteneingabeobjekts ergeben oder etwa aus zuvor getätigten Eingaben und Bedienungen bestimmter virtueller Bildobjekte. Die Verwendung einer Priorität oder Hierarchie der Bildobjekte ist immer dann von Vorteil, wenn über eines der Bildobjekte sicherheitsrelevante oder kritische Bedienungen erfolgen. In einem Fahrzeug könnte ein Bildobjekt 120 beispielsweise für die Bedienung von Fahrwerkseinstellungen oder sicherheitsrelevanten Fahrassistenzsystemen dienen, während ein weiteres Bildobjekt, beispielsweise 121, zur Bedienung des Radios oder der Klimaanlage ausgelegt sein kann. In diesem Fall würde dem ersten Bildobjekt eine deutlich höhere Priorität zugeordnet werden und würde den Vorzug bei der Erkennung von Gesten erhalten, da es sich bei dieser Bedienung um sicherheitsrelevante Eingaben handelt.

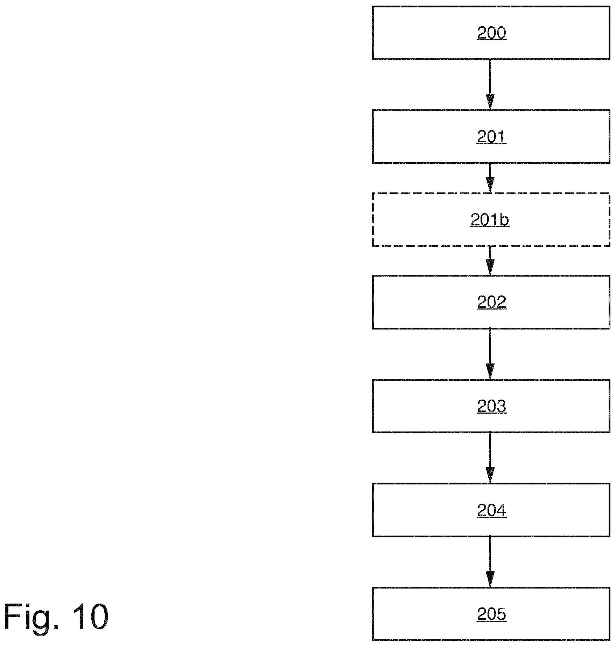

In Figur 10 wird nochmals schematisch und beispielhaft der Ablauf des Verfahrens gemäß der Erfindung zur spezifischen oder objektspezifischen Ermittlung der Gestenerkennungskoordinate aufgezeigt.

In einem ersten Schritt 200 können die Sensoren 100 bis 103 (Gestenerkennungssensoren) die Koordinaten eines Objekts (Gesteneingabeobjekt) in ihrem jeweiligen Erfassungsbereich in einem Sensorkoordinatensystem 115 bis 118 erfassen. Ein Gestenerkennungsobjekt kann z. B. ein Finger, eine Hand, ein Zeiger oder Ähnliches sein, um eine Geste zur Steuerung der Vorrichtung zur Gestenerkennung zu erzeugen und die Vorrichtung bzw. ein Gerät zu beeinflussen und eine Aktion hervorzurufen. Die Sensorkoordinaten, die von den Sensoren und der Gestenerkennungseinheit ermittelt werden, können in einer ersten Transformation bevorzugt und zu einem Feature-Vektor zusammengefasst werden. Aus diesem Vektor kann in einem zweiten Schritt 201 - beispielsweise bevorzugt durch statistische Verfahren - der Ort des Gesteneingabeobjekts in einem Bezugskoordinatensystem geschätzt werden. Das Bezugskoordinatensystem kann bevorzugt das Koordinatensystem des Bildschirms sein, das sich in den Raum vor dem Bilschirm erstreckt. Bevorzugt ist es ein kartesisches Koordinatensystem.

Im einfachsten Fall können beispielsweise drei Abstandssensoren 100 bis 102 die drei Abstände zu einem Gesteneingabeobjekt in einem sphärischen Koordinatensystem ermitteln und daraus - bevorzugt mit Hilfe der Gestenerkennungseinheit oder einer anderen Steuer- oder Auswerteeinheit - den Ort des Gesteneingabeobjekts in dem Bezugskoordinatensystem bestimmen, das beispielsweise dem kartesischen Koordinatensystem und bevorzugt dem Bildschirm zugeordnet sein kann.

In einem dritten Schritt 202, der im Falle eines einzelnen Gestenerkennungskoordinatensystems entfallen kann, wird durch die Gestenerkennungsvorrichtung, bevorzugt durch die Gestenerkennungseinheit 5, ermittelt, welche objektspezifischen Gestenerkennungskoordinatensysteme 130 bis 132 den im Bezugskoordinatensystem erfassten Raumpunkt (Koordinate) des Gesteneingabeobjekts umfassen. Sofern der im Bezugskoordinatensystem erfasste Raumpunkt des Gesteneingabeobjekts in keinem Erfassungsbereich der objektspezifischen Gestenerkennungskoordinatensysteme 130 bis 132 liegt, also in keinem der Gestenerkennungskoordinatensysteme 130 bis 132 der virtuellen Bildobjekte 120 bis 122, kann gegebenenfalls auf ein globales System-Gestenerkennungskoordinatensystem zurückgegriffen werden. Beispielsweise kann ein System-Gestenerkennungskoordinatensystem ähnlich dem sein, wie es in Figur 5 dargestellt ist. Hierbei könnte das bediente Bildobjekt auf dem Bildschirm 3, das durch die von dem Gesteneingabeobjekt hervorgerufene Geste gesteuert werden soll, bevorzugt die zum Zeitpunkt der Bedienung sichtbare globale Hierarchieebene der Mensch-Maschine-Schnittstelle sein. Bei einem Computer ist dies typischerweise der Desktop.

In einem weiteren Schritt 203 kann die Entscheidung, welchem von den mehreren potentiellen geeigneten Gestenerkennungskoordinatensystemen die Gestenkoordinate (Raumpunkt oder Koordinate des Gesteneingabeobjekts) zuzuordnen ist, erfolgen. In diesem Schritt kann somit aufgrund einer Hierarchieregel (Prioritätsregel) entschieden werden, welches Gestenerkennungskoordinatensystem zu wählen ist. Der Schritt 203 kann entfallen, wenn nur ein Gestenerkennungskoordinatensystem 130 vorhanden oder relevant ist.

Möglicherweise vorhandene Überlappungsbereiche 140 können genau einem bildobjektspezifischen Gestenerkennungskoordinatensystem zugeordnet werden, also einem Gestenerkennungskoordinatensystem 130 bis 132 eines virtuellen Bildobjekts 120 bis 122.

In einem weiteren Schritt 204 können die Koordinaten aus dem Bezugskoordinatensystem in das nunmehr priorisierte (bild-)objektspezifische Gestenerkennungskoordinatensystem transformiert oder umgerechnet werden.

In einem weiteren, bevorzugt letzten Schritt 205 kann die Gestenerkennung in dem priorisierten objektspezifischen Gestenerkennungskoordinatensystem erfolgen, also in dem Gestenerkennungskoordinatensystem 130 bis 132 eines ausgewählten und priorisierten Bildobjekts 120 bis 122. Die Verarbeitung des erkannten Gestenbefehls kann entsprechend objektspezifischen, eigenen Gestenbefehlen erfolgen. Hierbei hängt bevorzugt das Gestenerkennungskoordinatensystem mit dem zugehörigen virtuellen Bildobjekt derart zusammen, dass nach Auswahl des Gestenerkennungskoordinatensystems 130 bis 132 die zugeordneten Bildobjekte 120 bis 122 als Grundlage für die spezifischen Gestenbefehle dienen, die den virtuellen Bildobjekten 120 bis 122 zugewiesen sind.

Es ist selbstverständlich auch denkbar, einen Gestenbefehl, der für alle virtuellen Bildobjekte gleichermaßen zum Gestenvokabular gehört, bereits nach der Konversion der Koordinaten aus dem Sensorkoordinatensystem 115, 116, 117, 118 in das Bezugskoordinatensystem im zweiten Schritt 201 in einem zwischengeschobenen Prozessschritt 201b zu wandeln. Dann können nur noch die Schwerpunktskoordinaten in dem Maß des Bezugskoordinatensystems weitergegeben werden. Eine Information über die erkannte Geste kann an die nachfolgenden Schritte 202 bis 205 im Verfahren weitergereicht werden.

In diesem (letzten) Schritt erfolgt somit die objektspezifische Gestenerkennung und die objektspezifische (spezifisch für das ausgewählte Bildobjekt) Ausführung des Gestenbefehls auf Basis der so ermittelten objektspezifischen (bildobjekt-spezifischen) Gestenerkennungskoordinaten, die nunmehr also einem angezeigten Fenster oder einem angezeigten Bildobjekt zugeordnet sind.

Bevorzugt erfolgen alle Umrechnungen, Koordinatensystem-Transformationen und Steuerungen in der Gestenerkennungseinheit 5 der Vorrichtung 4. Bevorzugt kann auch die Positionsbestimmung eines Gesteneingabeobjekts, bspw. eines Fingers, mittels der Gestenerkennungseinheit 5 erfolgen. Die Gestenerkennungseinheit 5 kann deshalb bevorzugt einen Postionserkennungsalgorithmus umfassen und verwenden. Dieser kann bevorzugt auch die Ablaufsteuerung des Verfahrens steuern. Alternativ ist ein entsprechend geeigneter Algorithmus in der Gestenerkennungseinheit 5 oder der Vorrichtung vorgesehen.

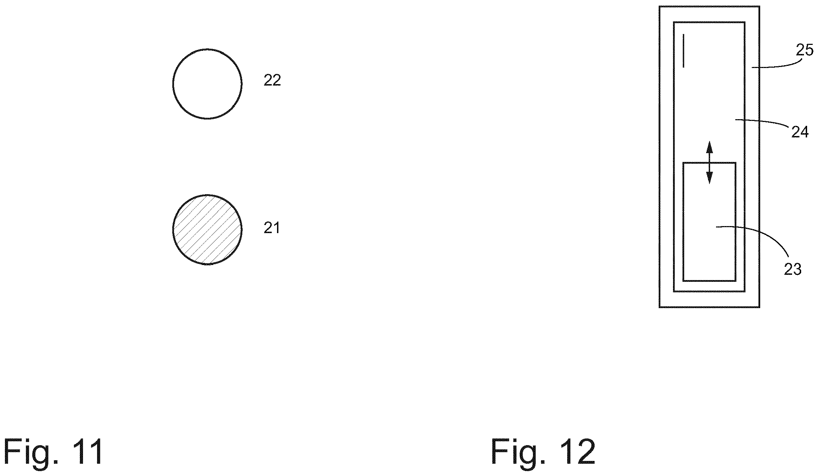

Wie beispielhaft in Figur 11 gezeigt ist, kann der zweite Anzeigebereich 17 im Fahrzeug typischerweise und bevorzugt Regler und Schalter umfassen, um elektrische Verbraucher im Fahrzeug einzuschalten, auszuschalten oder zu verändern. Dies können beispielsweise Ein-Aus-Schaltknöpfe sein. Derartige virtuelle Knöpfe können in der gedrückten Stellung farbig oder hell markiert oder mit einem höheren Kontrast versehen dargestellt sein, wie beispielsweise der gedrückte Knopf 21. Im nicht gedrückten Zustand weist der Knopf 22 eine leere Fläche auf und zeigt lediglich eine Umrandung.

Daneben können auch Drehknöpfe, Drehschalter oder Schiebeschalter verwendet werden, wie sie beispielsweise in Figur 12 gezeigt sind. Ein Schieber 23 wird in einem Schiebebereich 24 durch Gestensteuerung bewegt. Der Schiebebereich 24 ist dabei bevorzugt durch eine Umrandung 25 gegenüber den übrigen Darstellungen und der restlichen Bildschirmfläche des Bildschirms 3 abgegrenzt. Es ist auch möglich, den Schieber 23 in seiner Größe durch Gestensteuerung zu verändern, um einen Sollwert zu erhöhen. Beispielsweise könnte eine Temperatureinstellung auf diese Weise erfolgen, wobei mit Vergrößerung des Schiebers 23 die Temperatur steigt.

Das in Figur 12 dargestellte Objekt könnte jedoch auch ein Anzeigeinstrument für eine analoge Größe sein, bei der die Größe eines Wertes beispielsweise durch einen Balken oder den Schieber 23 angezeigt wird. Beispielsweise könnte auf diese Weise der Tankinhalt oder eine Raumtemperatur angezeigt werden.

Wird der Schiebeschalter gemäß Figur 12 jedoch zur Steuerung einer analogen Größe wie beispielsweise der Temperatur verwendet, kann durch Bewegen oder Vergrößern des Schiebers 23 eine Einstellung hervorgerufen werden. Diese Änderung der Einstellung erfolgt durch eine Gestenbedienung, in der beispielsweise die Hand nach oben oder unten bewegt wird, nachdem der entsprechende Schalter ausgewählt wurde, oder in dem zwei oder mehr Finger voneinander wegbewegt werden. Nicht nur der Schiebeschalter, auch Druckknöpfe sowie realisierte Drehregler werden durch vorzugsweise berührungslose Gesten gesteuert und verändert.

In einer bevorzugten Ausführungsform ist der Bildschirm 3 nicht einstückig ausgebildet, sondern kann aus mehreren Bildschirmkacheln zusammengesetzt werden. Diese Bildschirmkacheln können jede für sich flach sein. Die zwischen den Bildschirmkacheln gebildeten Nähte sind vorzugsweise derart gestaltet, dass ihre Krümmung an den Begrenzungslinien gleich ist, so dass ein nahtloser Übergang geschaffen wird. Besonders bevorzugt ist jedoch ein einstückig ausgebildeter Bildschirm 3, der eine entsprechende Krümmung aufweist. Hierdurch ergibt sich ein sehr homogenes Gesamtbild.

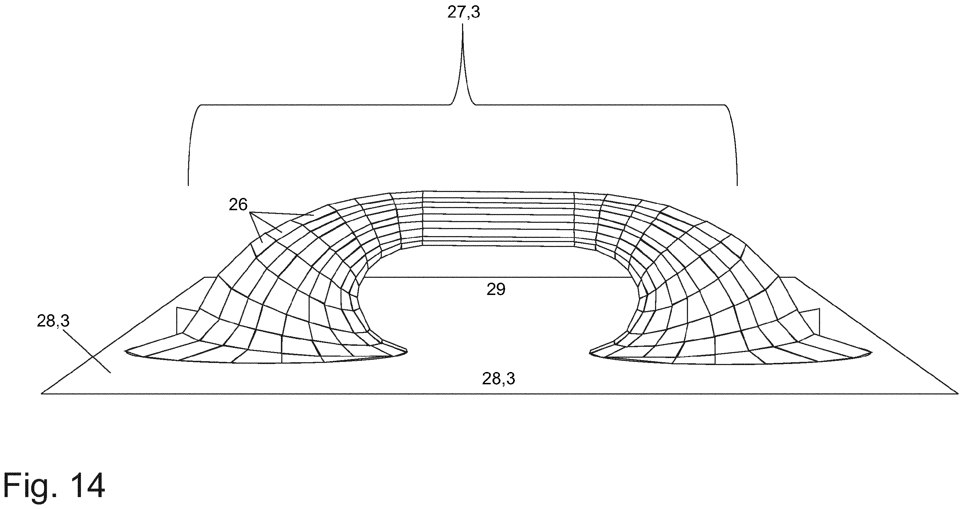

Das in Figur 14 dargestellte Beispiel zeigt einen, aus vielen kleinen Bildschirmen 26 zusammengesetzten Türgriff 27. Der Türgriff 27 ist also Teil des Bildschirms 3, der auch einen flachen Bildschirmbereich 28 aufweist. Zwischen dem eigentlichen Türgriff 27 und dem flachen Bildschirmbereich 28 weist der Bildschirm 3 eine Öffnung 29 auf, die das mathematisch topologische Geschlecht des Bildschirms 3 auf 1 anhebt.

Dabei sei angenommen, dass ein normaler flacher Bildschirm 3 eine Quaderform und damit das mathemaisch topologische Geschlecht 0 hat.

Wenn in dieser Offenbarung von mathematisch topologischem Geschlecht gesprochen wird, so ist die Differenz des mathematisch topologischen Geschlechts gemeint, um die sich der betrachtete Bildschirm in seinem mathematisch topologischen Geschlecht von dem mathematisch topologischen Geschlecht eines flachen rechteckigen Standardbildschirms in Quaderform unterscheidet.

## Patentansprüche

1. Verfahren zur Gestenerkennung mittels einer Vorrichtung zur Gestenerkennung mit
- einem Bildschirm (3) zur Anzeige von graphischen Daten oder einem Bildobjekt (120, 121, 122);
- einer Gestenerkennungseinheit (5), die einen Sensor (100, 101, 102, 103) zur Erkennung eines Objekts und des Abstands des Objekts vom Sensor (100, 101, 102, 103) umfasst,
umfassend die folgenden Schritte:
- Erfassen der Position eines Objekts oder einer Positionsänderung des Objekts,
- Ermitteln des Abstands des Objekts von dem Bildschirm (3) mittels des Sensors (100, 101, 102, 103),
- Bestimmen der Position des Objekts oder der Positionsänderung mittels eines Positionserkennungsalgorithmus, wobei die Position in einem Sensorkoordinatensystem (115, 116, 117, 118) im Erfassungsbereich des Sensors (100, 101, 102, 103) bestimmt wird,
- Ermitteln der Position des Objekts in einem Gestenerkennungskoordinatensystem (130, 131, 132), das ein dreidimensionales nicht kartesisches Koordinatensystem ist,
- Erkennen einer Geste aus der ermittelten Position oder Positionsänderung des Objekts,
- Darstellen mehrerer Bildobjekte (120 ,121, 122) auf dem Bildschirm (3),
**gekennzeichnet dadurch, dass** das Gestenerkennungskoordinatensystem (130, 131, 132) folgendermaßen ausgewählt wird:
- Erstellen je eines Gestenerkennungskoordinatensystems (130, 131, 132) für jedes der mehreren Bildobjekte (120, 121, 122),
- wobei die Lage des jeweiligen Gestenerkennungskoordinatensystems (130, 131, 132) von der Lage des Bildobjekts (120, 121, 122) auf dem Bildschirm (3) abhängt,
- Zuweisen einer Priorität und/oder Hierarchie für wenigstens eines der Bildobjekte (120, 121, 122).
- Auswählen eines Gestenerkennungskoordinatensystems (130, 131, 132) eines Bildobjekts (120, 121, 122) unter Berücksichtigung der Priorität oder der Hierarchie der Bildobjekte (120, 121, 122).

2. Verfahren nach Anspruch 1, **gekennzeichnet durch** den folgenden Schritt:
- Verändern des Gestenerkennungskoordinatensystems (130, 131, 132) derart, dass ein Punkt des Bildobjekts (120, 121, 122) auf dem Bildschirm, bevorzugt der Mittelpunkt oder Schwerpunkt des Bildobjekts (120, 121, 122), in dem Koordinatenursprung des Gestenerkennungskoordinatensystems (130, 131, 132) liegt.

3. Verfahren nach einem der vorherigen Ansprüche, **gekennzeichnet durch** die folgenden Schritte:
- Auswerten der erkannten Geste,
- Hervorrufen einer Aktion entsprechend der erkannten Geste, wobei die Aktion die Steuerung eines zu bedienenden Gerätes, eine Zustandsänderung eines Gerätes oder der Vorrichtung (4) zur Gestenerkennung oder eine Änderung des angezeigten Bildschirminhalts (Bildobjekt (120, 121, 122)) des Bildschirms (3) einschließt.

4. Verfahren nach einem der vorhergehenden Ansprüche, **dadurch gekennzeichnet, dass** zur Erkennung der Position des Objekts oder einer Positionsänderung des Objekts wenigstens drei Sensoren (100, 101, 102, 103) verwendet werden und bevorzugt jeder der Sensoren (100, 101, 102, 103) ein Sensorkoordinatensystem (115, 116, 117, 118) verwendet, das besonders bevorzugt sphärisch ist,
und **gekennzeichnet durch** die folgenden Schritte:
- Transformierung der Positionskoordinaten des Objekts aus den Sensorkoordinatensystemen (115, 116, 117, 118) in ein Bezugskoordinatensystem des Bildschirms, das bevorzugt ein kartesisches Koordinatensystem ist.

5. Verfahren nach einem der vorhergehenden Ansprüche, **gekennzeichnet durch** die folgenden Schritte:
- Ermitteln des Abstands des Objekts von dem Bildschirm (3) entlang einer Rückverfolgungskurve in dem Sensorkoordinatensystem (115, 116, 117, 118),
- Ermitteln der Position des Objekts in dem Gestenerkennungskoordinatensystem (130, 131, 132).
- Festlegen einer Rückverfolgungskurve in dem Gestenerkennungskoordinatensystem (130, 131, 132) von dem Objekt zum Bildschirm (3) und Ermitteln eines Auftreffpunkts der Rückverfolgungskurve auf dem Bildschirm (3),
- Auswerten und optionales Vergleichen des Abstands und/oder des Auftreffpunkts auf dem Bildschirm mit einem vorgegebenen Schwellwert.

6. Verfahren nach einem der vorhergehenden Ansprüche, **gekennzeichnet durch**:
- Erzeugen eines Markierungsbereichs auf dem Bildschirm (3), bevorzugt mittels der Gestenerkennungseinheit (5), wobei bevorzugt die Auflösung zur Darstellung eines graphischen Objekts in dem Markierungsbereich oder eines Teils des Bildobjekts (120, 121, 122) in dem Markierungsbereich von der Auflösung außerhalb des Markierungsbereichs verschieden ist, wobei bevorzugt eine Vergrößerung des im Markierungsbereich dargestellten graphischen Objekts oder des Teils des Bildobjekts (120, 121, 122) erfolgt.

7. Verfahren nach einem der vorhergehenden Ansprüche, **dadurch gekennzeichnet, dass** der Bildschirm (3) einen ersten Bereich (14) mit einer ersten Krümmung aufweist und der Bildschirm (3) an wenigstens einer Stelle, die zur Anzeige von graphischen Daten oder einem Bildobjekt (120, 121, 122) verwendet wird, eine Krümmung aufweist, die von Null verschieden ist.

8. Verfahren nach Anspruch 7, **dadurch gekennzeichnet, dass** der Bildschirm (3) einen zweiten Bereich (13) mit einer zweiten Krümmung aufweist, wobei das Vorzeichen der ersten Krümmung verschieden ist von dem Vorzeichen der zweiten Krümmung.

9. Vorrichtung zur Gestenerkennung umfassend einen Bildschirm (3) und eine Gestenerkennungseinheit (5), die einen Sensor (6) zur Erkennung der Position eines Objekts und zur Erkennung einer Positionsänderung des Objekts umfasst und die dazu eingerichtet und ausgebildet ist, ein Verfahren nach einem der vorherigen Ansprüche auszuführen,
wobei
- mehrere Gestenerkennungskoordinatensysteme (130, 131, 132) von der Gestenerkennungseinheit (5) verwendet werden, um eine Geste des Objekts zu erkennen und eine Aktion zur Steuerung der Vorrichtung (4) auszulösen,
- mehrere Bildobjekte (120, 121, 122) auf dem Bildschirm (3) dargestellt werden,
- für jedes der mehreren Bildobjekte (120, 121, 122) ein eigenes Gestenerkennungskoordinatensystem (130, 131, 132) verwendet wird,
- die Lage des Gestenerkennungskoordinatensystems (130, 131, 132) von der Lage des Bildobjekts (120, 121, 122) auf dem Bildschirm (3) abhängt,
- wenigstens einem der Bildobjekte (120, 121, 122) eine Priorität und/oder Hierarchie zugewiesen wird, und
- ein Gestenerkennungskoordinatensystem (130, 131, 132) eines Bildobjekts (120, 121, 122) unter Berücksichtigung der Priorität oder der Hierarchie der Bildobjekte (120, 121, 122) ausgewählt wird.

10. Vorrichtung zur Gestenerkennung, nach Anspruch 9, **dadurch gekennzeichnet, dass**
- ein Bildschirm (3) einen ersten Bereich mit einer ersten Krümmung und einen zweiten Bereich mit einer zweiten Krümmung aufweist, wobei das Vorzeichen der ersten Krümmung bevorzugt verschieden ist von dem Vorzeichen der zweiten Krümmung,
- der Bildschirm (3) an wenigstens einer Stelle, die zur Anzeige grafischer Daten oder eines Bildobjekts (120, 121, 122) verwendet wird, eine Krümmung aufweist, die von Null verschieden ist, und
- die Gestenerkennungseinheit (5) einen Sensor (6) und einen Positionserkennungsalgorithmus aufweist, der aus dem mittels des Sensors (6) ermittelten Abstand des Objekts die Position des Objekts in dem Gestenerkennungskoordinatensystem (130, 131, 132) ermittelt, welches ein nicht kartesisches Koordinatensystem ist.

11. Vorrichtung nach Anspruch 9 oder 10, **dadurch gekennzeichnet, dass** die Vorrichtung zur Gestenerkennung drei Sensoren (100, 101, 102, 103) umfasst und die drei Sensoren (100, 101, 102, 103) wenigstens jeweils den Abstand zu einem Objekt ermitteln, aus denen die Position des Objekts in dem Gestenerkennungskoordinatensystem (130, 131, 132) bestimmt wird.

12. Vorrichtung nach Anspruch 11, **dadurch gekennzeichnet, dass** mittels der drei Sensoren (100, 101, 102, 103) die Position des Objekts in einem Sensorkoordinatensystem (115, 116, 117, 118) bestimmt wird und die Gestenerkennungseinheit (5) die Position des Objekts in ein Bezugskoordinatensystem transformiert, das bevorzugt ein Bezugskoordinatensystem in Bezug auf den Bildschirm ist und besonders bevorzugt ein kartesisches Koordinatensystem ist.

13. Vorrichtung nach einem der Ansprüche 9 bis 12, **dadurch gekennzeichnet, dass** wenigstens zwei Gestenerkennungskoordinatensysteme (130, 131, 132) einen Überlappungsbereich (140) aufweisen, wobei der Überlappungsbereich (140) bevorzugt einem der beiden Gestenerkennungskoordinatensysteme (130, 131, 132) zugeordnet wird, besonders bevorzugt dem Gestenerkennungskoordinatensystem (130, 131, 132) zugeordnet wird, das bei einer Auswahl Berücksichtigung findet.

14. Vorrichtung nach einem der Ansprüche 9 bis 13, **dadurch gekennzeichnet, dass** das Erkennen der Position eines Objekts oder der Positionsänderung berührungslos erfolgt und die Gestenerkennungseinheit (5) dazu eingerichtet ist, Berührungsgesten und/oder dreidimensionale Gesten zu erkennen.

15. Vorrichtung nach einem der Ansprüche 9 bis 14, **dadurch gekennzeichnet, dass** die Vorrichtung (4) Teil eines zu bedienenden Gerätes ist, insbesondere Teil eines Fahrzeugs (1), bevorzugt eines Automobils, wobei bevorzugt wenigstens Teile oder Einheiten oder Aggregate des zu bedienenden Geräts, insbesondere des Fahrzeugs (1), durch die Gestenerkennungsvorrichtung (5) bedient oder deren Zustand verändert wird.

## Claims

1. A method for gesture recognition by means of a device for gesture recognition, having
- a screen (3) for displaying graphical data or an image object (120, 121, 122);
- a gesture recognition unit (5) that includes a sensor (100, 101, 102, 103) for recognizing an object and the distance of the object from the sensor (100, 101, 102, 103),
comprising the following steps:
- detecting the position of an object or a change in position of the object,
- ascertaining the distance of the object from the screen (3) by means of the sensor (100, 101, 102, 103),
- determining the position of the object or the change in position by means of a position recognition algorithm, the position being determined in a sensor coordinate system (115, 116, 117, 118) in the detection range of the sensor (100, 101, 102, 103),
- ascertaining the position of the object in a gesture recognition coordinate system (130, 131, 132) which is a three-dimensional non-Cartesian coordinate system,
- recognizing a gesture from the ascertained position or change in position of the object,
- representing multiple image objects (120, 121, 122) on the screen (3),
**characterized in that**
the gesture recognition coordinate system (130, 131, 132) is selected as follows:
- creating a gesture recognition coordinate system (130, 131, 132) for each of the multiple image objects (120, 121, 122),
- wherein the position of the particular gesture recognition coordinate system (130, 131, 132) depends on the position of the image object (120, 121, 122) on the screen (3),
- assigning a priority and/or hierarchy for at least one of the image objects (120, 121, 122).
- selecting a gesture recognition coordinate system (130, 131 132) of an image object (120, 121, 122), taking into account the priority or the hierarchy of the image objects (120, 121, 122).

2. The method according to Claim 1, **characterized by** the following step:
- changing the gesture recognition coordinate system (130, 131 132) in such a way that a point of the image object (120, 121, 122) on the screen, preferably the midpoint or center of gravity of the image object (120, 121, 122), is situated in the coordinate origin of the gesture recognition coordinate system (130, 131, 132).

3. The method according to one of the preceding claims, **characterized by** the following steps:
- evaluating the recognized gesture,
- initiating an action corresponding to the recognized gesture, the action including the control of an apparatus to be operated, a change of state of an apparatus or of the device (4) for gesture recognition, or a change in the displayed screen content (image object (120, 121, 122)) of the screen (3).

4. The method according to one of the preceding claims, **characterized in that** at least three sensors (100, 101, 102, 103) for recognizing the position of the object or a change in position of the object are used, and preferably each of the sensors (100, 101, 102 103) uses a sensor coordinate system (115, 116, 117, 118) that is particularly preferably spherical,
and **characterized by** the following steps:
- transforming the position coordinates of the object from the sensor coordinate systems (115, 116, 117, 118) into a reference coordinate system of the screen, which preferably is a Cartesian coordinate system.

5. The method according to one of the preceding claims, **characterized by** the following steps:
- ascertaining the distance of the object from the screen (3) along a tracing curve in the sensor coordinate system (115, 116, 117, 118),
- ascertaining the position of the object in the gesture recognition coordinate system (130, 131, 132),
- specifying a tracing curve in the gesture recognition coordinate system (130, 131, 132) from the object to the screen (3), and ascertaining a point of contact of the tracing curve on the screen (3),
- evaluating and optionally comparing the distance and/or the point of contact on the screen to a predefined threshold value.

6. The method according to one of the preceding claims, **characterized by**:
- creating a marked area on the screen (3), preferably by means of the gesture recognition unit (5), the resolution for representing a graphical object in the marked area or a portion of the image object (120, 121, 122) in the marked area preferably being different from the resolution outside the marked area, and the graphical object or the portion of the image object (120, 121, 122) represented in the marked area preferably being enlarged.

7. The method according to one of the preceding claims, **characterized in that** the screen (3) has a first area (14) with a first curvature, and the screen (3) has a curvature that is different from zero at at least one location that is used for displaying graphical data or an image object (120, 121, 122).

8. The method according to Claim 7, **characterized in that** the screen (3) has a second area (13) with a second curvature, the algebraic sign of the first curvature being different from the algebraic sign of the second curvature.

9. A device for gesture recognition, comprising a screen (3) and a gesture recognition unit (5) that includes a sensor (6) for recognizing the position of an object and for recognizing a change in position of the object, and that is configured and designed for carrying out a method according to one of the preceding claims,
wherein
- multiple gesture recognition coordinate systems (130, 131, 132) are used by the gesture recognition unit (5) in order to recognize a gesture of the object and initiate an action for controlling the device (4),
- multiple image objects (120, 121, 122) are represented on the screen (3),
- a separate gesture recognition coordinate system (130, 131, 132) is used for each of the multiple image objects (120, 121, 122),
- the position of the gesture recognition coordinate system (130, 131, 132) depends on the position of the image object (120, 121, 122) on the screen (3),
- a priority and/or hierarchy is assigned to at least one of the image objects (120, 121, 122), and
- a gesture recognition coordinate system (130, 131, 132) of an image object (120, 121, 122) is selected, taking into account the priority or the hierarchy of the image objects (120, 121, 122).

10. The device for gesture recognition according to Claim 9, **characterized in that**
- a screen (3) has a first area with a first curvature and a second area with a second curvature, the algebraic sign of the first curvature preferably being different from the algebraic sign of the second curvature,
- the screen (3) has a curvature that is different from zero at at least one location that is used for displaying graphical data or an image object (120, 121, 122), and
- the gesture recognition unit (5) has a sensor (6), and a position recognition algorithm that determines, from the distance of the object ascertained by means of the sensor (6), the position of the object in the gesture recognition coordinate system (130, 131, 132), which is a non-Cartesian coordinate system.

11. The device according to Claim 9 or 10, **characterized in that** the device for gesture recognition includes three sensors (100, 101, 102, 103), and the three sensors (100, 101, 102, 103) in each case at least ascertain the distance from an object, from which the position of the object in the gesture recognition coordinate system (130, 131, 132) is determined.

12. The device according to Claim 11, **characterized in that** the position of the object in a sensor coordinate system (115, 116, 117, 118) is determined by means of the three sensors (100, 101, 102, 103), and the gesture recognition unit (5) transforms the position of the object into a reference coordinate system, which preferably is a reference coordinate system with respect to the screen, and particularly preferably is a Cartesian coordinate system.

13. The device according to one of Claims 9 to 12, **characterized in that** at least two gesture recognition coordinate systems (130, 131, 132) have an overlap area (140), the overlap area (140) preferably being associated with one of the two gesture recognition coordinate systems (130, 131, 132), and particularly preferably being associated with the gesture recognition coordinate system (130, 131, 132) that is taken into account in a selection.

14. The device according to one of Claims 9 to 13, **characterized in that** the recognition of the position of an object or of the change in position takes place in a contactless manner, and the gesture recognition unit (5) is configured for recognizing touch gestures and/or three-dimensional gestures.

15. The device according to one of Claims 9 to 14, **characterized in that** the device (4) is part of an apparatus to be operated, in particular part of a vehicle (1), preferably an automobile, wherein preferably at least parts or components or units of the apparatus to be operated, in particular the vehicle (1), are operated or their state is changed using the gesture recognition device (5).

## Revendications

1. Procédé de reconnaissance de gestes au moyen d'un dispositif destiné à la reconnaissance de gestes avec
- un écran (3) destiné à l'affichage de données graphiques ou d'un objet image (120, 121, 122) ;
- une unité de reconnaissance de gestes (5), qui comprend un capteur (100, 101, 102, 103) pour la reconnaissance d'un objet et de la distance de l'objet au capteur (100, 101, 102, 103),
comprenant les étapes suivantes :
- détection de la position d'un objet ou d'un changement de position de l'objet,
- détermination de la distance de l'objet à l'écran (3) au moyen du capteur (100, 101, 102, 103),
- détermination de la position de l'objet ou du changement de position au moyen d'un algorithme de reconnaissance de position, la position étant déterminée dans un système de coordonnées de capteur (115, 116, 117, 118) dans la zone de détection du capteur (100, 101, 102, 103),
- détermination de la position de l'objet dans un système de coordonnées de reconnaissance de gestes (130, 131, 132) qui est un système de coordonnées tridimensionnel non cartésien,
- reconnaissance d'un geste à partir de la position déterminée ou du changement de position de l'objet,
- représentation de plusieurs objets images (120, 121, 122) sur l'écran (3),
**caractérisé en ce que** le système de coordonnées de reconnaissance de gestes (130, 131, 132) est sélectionné de la manière suivante :
- élaboration d'un système de coordonnées de reconnaissance de gestes (130, 131, 132) pour chacun des objets images (120, 121, 122),
- dans lequel la position du système de coordonnées de reconnaissance de gestes (130, 131, 132) respectif dépend de la position de l'objet image (120, 121, 122) sur l'écran (3),
- attribution d'une priorité et/ou d'une hiérarchie pour au moins l'un des objets images (120, 121, 122),
- sélection d'un système de coordonnées de reconnaissance de gestes (130, 131, 132) d'un objet image (120, 121, 122) en tenant compte de la priorité ou de la hiérarchie des objets images (120, 121, 122).

2. Procédé selon la revendication 1, **caractérisé par** l'étape suivante :
- modification du système de coordonnées de reconnaissance de gestes (130, 131, 132) de telle sorte qu'un point de l'objet image (120, 121, 122) sur l'écran, de préférence le point central ou le centre de gravité de l'objet image (120, 121, 122), se trouve à l'origine des coordonnées du système de coordonnées de reconnaissance de gestes (130, 131, 132).

3. Procédé selon l'une quelconque des revendications précédentes, **caractérisé par** les étapes suivantes :
- évaluation des gestes reconnus,
- appel d'une action correspondant aux gestes reconnus, l'action incluant alors la commande d'un appareil à commander, un changement d'état d'un appareil ou du dispositif (4) pour la reconnaissance de gestes ou un changement du contenu d'écran affiché (objet image (120, 121, 122)) de l'écran (3).

4. Procédé selon l'une quelconque des revendications précédentes, **caractérisé en ce que**, pour la reconnaissance de la position de l'objet ou d'un changement de position de l'objet, on utilise au moins trois capteurs (100, 101, 102, 103) et, de préférence, chacun des capteurs (100, 101, 102, 103) utilise un système de coordonnées de capteur (115, 116, 117, 118) qui, de manière particulièrement préférée, est sphérique,
et **caractérisé par** les étapes suivantes :
- transformation des coordonnées de position de l'objet à partir des systèmes de coordonnées de capteur (115, 116, 117, 118) en un système de coordonnées de référence de l'écran qui est de préférence un système de coordonnées cartésien.

5. Procédé selon l'une quelconque des revendications précédentes, **caractérisé par** les étapes suivantes :
- détermination de la distance de l'objet à l'écran (3) le long d'une courbe de traçage dans le système de coordonnées de capteur (115, 116, 117, 118),
- détermination de la position de l'objet dans le système de coordonnées de reconnaissance de gestes (130, 131, 132),
- spécification d'une courbe de traçage dans le système de coordonnées de reconnaissance de gestes (130, 131, 132) de l'objet à l'écran (3) et détermination d'un point d'incidence de la courbe de traçage sur l'écran (3),
- évaluation et comparaison éventuelle de la distance et/ou du point d'incidence sur l'écran avec une valeur de seuil prédéterminée.

6. Procédé selon l'une quelconque des revendications précédentes, **caractérisé par** :
- la production d'une zone de marquage sur l'écran (3), de préférence au moyen de l'unité de reconnaissance de gestes (5), la résolution destinée à la représentation d'un objet graphique dans la zone de marquage ou d'une partie de l'objet image (120, 121, 122) dans la zone de marquage étant alors de préférence différente de la résolution en dehors de la zone de marquage, un agrandissement de l'objet graphique représenté dans la zone de marquage ou de la partie de l'objet image (120, 121, 122) s'effectuant alors de préférence.

7. Procédé selon l'une quelconque des revendications précédentes, **caractérisé en ce que** l'écran (3) présente une première zone (14) avec une première courbure et l'écran (3) présente, au moins à un endroit qui est utilisé pour l'affichage de données graphiques ou d'un objet image (120, 121, 122), une courbure qui est différente de zéro.

8. Procédé selon la revendication 7, **caractérisé en ce que** l'écran (3) présente une deuxième zone (13) avec une deuxième courbure, le signe de la première courbure étant différent du signe de la deuxième courbure.

9. Dispositif destiné à la reconnaissance de gestes comprenant un écran (3) et une unité de reconnaissance de gestes (5) qui comprend un capteur (6) destiné à la reconnaissance de la position d'un objet et à la reconnaissance d'un changement de position de l'objet et qui est conçue et construite pour mettre en oeuvre un procédé selon l'une quelconque des revendications précédentes,
dans lequel
- plusieurs systèmes de coordonnées de reconnaissance de gestes (130, 131, 132) sont utilisés par l'unité de reconnaissance de gestes (5) dans le but de reconnaître un geste de l'objet et de déclencher une action en vue de la commande du dispositif (4),
- plusieurs objets images (120, 121, 122) sont représentés sur l'écran (3),
- pour chacun des objets images (120, 121, 122), un système de coordonnées de reconnaissance de gestes (130, 131, 132) particulier est utilisé,
- la position du système de coordonnées de reconnaissance de gestes (130, 131, 132) dépend de la position de l'objet image (120, 121, 122) sur l'écran (3),
- une priorité et/ou une hiérarchie est ou sont attribuées à au moins l'un des objets images (120, 121, 122), et
- un système de coordonnées de reconnaissance de gestes (130, 131, 132) d'un objet image (120, 121, 122) est sélectionné en tenant compte de la priorité ou de la hiérarchie des objets images (120, 121, 122).

10. Dispositif destiné à la reconnaissance de gestes selon la revendication 9, **caractérisé en ce que**
- un écran (3) présente une première zone avec une première courbure et une deuxième zone avec une deuxième courbure, le signe de la première courbure étant de préférence différent du signe de la deuxième courbure,
- l'écran (3) présente, au moins à un endroit qui est utilisé pour l'affichage de données graphiques ou d'un objet image (120, 121, 122), une courbure qui est différente de zéro, et
- l'unité de reconnaissance de gestes (5) présente un capteur (6) et un algorithme de reconnaissance de position qui détermine à partir de la distance de l'objet déterminée au moyen du capteur (6) la position de l'objet dans le système de coordonnées de reconnaissance de gestes (130, 131, 132) qui est un système de coordonnées non cartésien.

11. Dispositif selon la revendication 9 ou 10, **caractérisé en ce que** le dispositif destiné à la reconnaissance de gestes comprend trois capteurs (100, 101, 102, 103) et les trois capteurs (100, 101, 102, 103) déterminent au moins à chaque fois la distance à un objet à partir de laquelle la position de l'objet dans le système de coordonnées de reconnaissance de gestes (130, 131, 132) est déterminée.

12. Dispositif selon la revendication 11, **caractérisé en ce que**, au moyen des trois capteurs (100, 101, 102, 103), la position de l'objet dans un système de coordonnées de capteur (115, 116, 117, 118) est déterminée et l'unité de reconnaissance de gestes (5) transforme la position de l'objet en un système de coordonnées de référence qui est de préférence un système de coordonnées de référence par rapport à l'écran et de manière particulièrement préférée un système de coordonnées cartésien.

13. Dispositif selon l'une quelconque des revendications 9 à 12, **caractérisé en ce qu'**au moins deux systèmes de coordonnées de reconnaissance de gestes (130, 131, 132) présentent une zone de chevauchement (140), laquelle zone de chevauchement (140) est associée de préférence à l'un des deux systèmes de coordonnées de reconnaissance de gestes (130, 131, 132), de manière particulièrement préférée au système de coordonnées de reconnaissance de gestes (130, 131, 132) qui est pris en compte lors d'une sélection.

14. Dispositif selon l'une quelconque des revendications 9 à 13, **caractérisé en ce que** la reconnaissance de la position d'un objet ou du changement de position s'effectue sans contact et l'unité de reconnaissance de gestes (5) est construite pour reconnaître des gestes de contact et/ou des gestes tridimensionnels.

15. Dispositif selon l'une quelconque des revendications 9 à 14, **caractérisé en ce que** le dispositif (4) fait partie d'un appareil à commander, en particulier d'un véhicule (1), de préférence une automobile, de préférence au moins des parties ou des unités ou des groupes de l'appareil à commander, en particulier du véhicule (1), sont commandés par l'unité de reconnaissance de gestes (5) ou leur état est modifié.
